# EUROPEAN PATENT SPECIFICATION

(11) **EP 1 345 749 B1**
(45) Date of publication and mention of the grant of the patent: **17.08.2005**
(21) Application number: 01983566.9
(22) Date of filing: 15.10.2001
(51) Int. Cl.: B29C 47/06, B29C 47/20, B29C 47/28

(54) **METHODS AND APPARATUS FOR EXTRUDING A TUBULAR FILM**
VERFAHREN UND VORRICHTUNG ZUM EXTRUDIEREN EINER SCHLAUCHFOLIE
PROCEDES ET APPAREIL D'EXTRUSION D'UN FILM TUBULAIRE

(30) Priority: 22.12.2000 GB 0031720; 11.04.2001 WO PCT/EP01/04885
(43) Date of publication of application: 24.09.2003
(73) Proprietor: Rasmussen, Ole-Bendt, 6318 Walchwil (CH)
(72) Inventor: Rasmussen, Ole-Bendt, 6318 Walchwil (CH)
(74) Representative: Jones, Helen Marjorie Meredith
(86) International application number: PCT/EP2001/012430
(87) International publication number: WO 2002/051617

(56) References cited:
- EP-A- 0 626 247
- EP-A- 0 771 641
- DE-A- 3 934 670
- GB-A- 1 384 979
- US-A- 3 581 344
- US-A- 5 690 972

## Description

The present invention relates to methods and apparatus for extruding a tubular film of polymer material with provision for the circumferential equalisation of the material in helical grooves, extending generally in a plane or conically, formed in one or more generally planar or conical diepart surfaces, and guiding the flow of material outward. The invention aims at better utilisation of the special possibilities which this particular arrangement of the grooves offers.

The patent literature relating to such methods and apparatus for extrusion, especially for coextrusion, comprises the following:
GB-A-1384979 (Farrell), EP-A-0626247 (Smith), WO-A-00/07801 (Neubauer) and WO-A-98/002834 (Planeta *et al*).

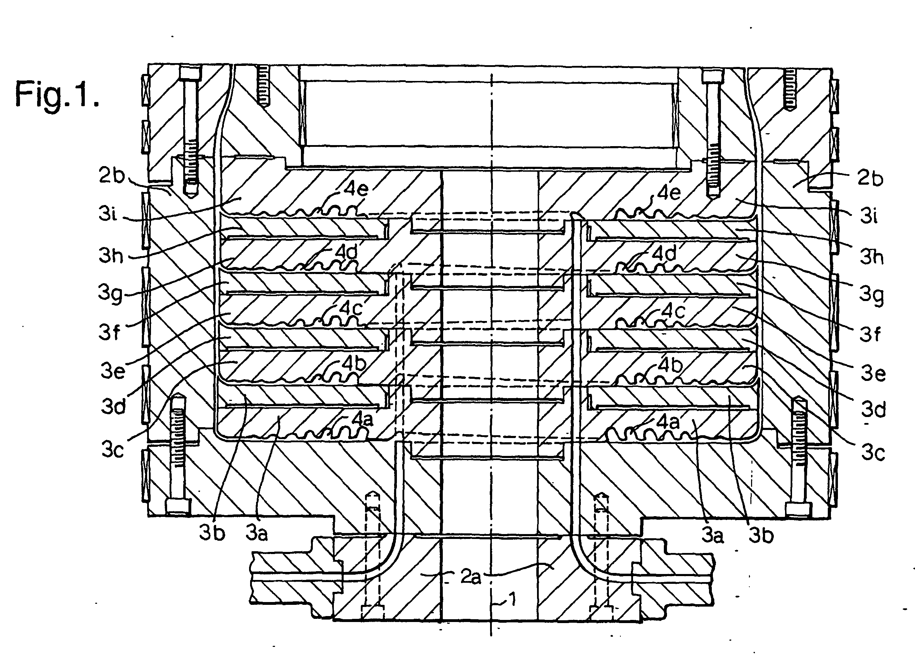

Figure 1 of the accompanying drawings is based on the last mentioned reference. This drawing shows that the circular extrusion - be it monoextrusion or coextrusion - which uses grooves which extend in a plane or conically for the circumferential equalisation of the flow or flows, offers several advantages over the more common system, in which the circumferential equalisation is established by use of cylindrically extending grooves, i.e. grooves formed in one or more cylindrical diepart surfaces.

Thus, when the polymer material is extruded outward at the same time as it is circumferentially equalised by means of the grooves, the space in the die can be very well utilized. This means that the die can be made very compact, which has importance not only for saving of steel and easier assemblage and disessemblage, but also for quickly and safely achieving even temperatures. Furthermore it is an advantage for cleaning work that most channels are formed between the clamped together dieparts and therefore easily accessible after a simple disassembling.

The circumferential distribution by use of helical grooves with space provided for overflow between the grooves - originally grooves formed in cylindrical surfaces - was first described about 30 years ago. In this system of distribution the cross-sections of each helical groove and of the space between adjacent grooves which allow overflow, is adapted so that gradually less and less material flows through each groove, and more and more passes over to the neighbour groove, while gradually the depth of the grooves reaches zero.

It has been claimed that a single helical groove, extending over several revolutions around the circular die can make a perfect circumferential distribution, provided the design of the groove and intervening spaces for overflow is exactly adapted to the rheological properties of the molten polymer material under the prevailing conditions. However, this is theory, and in practice the polymer flow must first in one or another way be divided into several part flows, each of these proceeding into a helical groove with space provided for overflow between the different grooves. The higher the number of part flows and thereby the number of grooves, the shorter the helical portion of each groove can be, but in any case the design of the grooves and of the spaces for overflow is essentially dependent on the rheological properties of the molten polymer material.

Uke most of the technology described in the documents listed above, the present invention is primarily related to coextrusion. It concerns provision of a middle film with surface layers, which have significantly higher melt flow index (and therefore significantly lower melt viscosity) than the middle film. This is a very important use of coextrusion, but as it shall be explained below the prior art dies of the described type are unsuitable for such applications.

A very important example is the coating on both sides of high molecular weight high-density polyethylene, (HMWHDPE) having a melt-flow index (m.f.i.) of about 0.1 or lower according to ASTM D1238 Condition E, with linear low-density polyethylene (LLDPE) or another ethylene copolymer having m.f.i. 0.5-1 or even higher. The HMWHDPE provides strength to the film, especially when it becomes oriented, while the surface layers provide improved bonding properties and/or improved gloss and/or increased coefficient of friction. The reason why the surface films in practice consist of copolymers which have higher m.f.i. is that such copolymers are more readily available in the market, give higher gloss and provide easier welding. Tubular coextrusion of HMWHDPE with surface layers of copolymers of a much higher m.f.i. is commonly carried out in circular coextrusion dies in which the circumferential equalisation is established by a system of helical grooves (with overflow) which extend in a geometrical arrangement as along a cylindrical surface. However, the prior art dies use the planar or conical arrangements of the helical grooves, which as mentioned as several advantages are very unsuited e.g. for the coextrusion of HMWHDPE having m.f.i. 0.1 or lower, with ethylene copolymers, having m.f.i. 0.5 or higher (reference to ASTM D1238 condition E). The same is true for the coextrusion of polypropylenes of similar high melt viscosities as HMWHDPE with copolymers which in practice are applicable as surface layers on such polypropylene film.

These known coextrusion dies consist of disc formed or shell ("bowl")-formed elements nested in a "bowl" or shell (which may consist of several parts screwed together) with the flow of two or more joined components taking place between a cylindrical or conical internal surface of this "bowl" and the outward surfaces of the nested elements. (For easy understanding see fig. 1). The joining of material takes place successively (sequentially). One surface component first joins with the component which shall become its neighbour, then the two components proceed together over a relatively long distance along the outward surface of a nested element before they meet the third component of the coextrusion. If more than three components are wanted in the final film these steps are repeated, always with a relatively long distance between the locations where joining takes place. This is required for constructional reasons. If there are extruded three or more components and at least two of these components exhibit very different melt viscosities, as in the example with HMWHDPE, this means that, over 5-10 cm or an even longer channel through the die, the viscosity of the component which contacts one surface of the channel will be very different from the viscosity of the component which contacts the opposite surface of the channel. Such combination produces a disturbed layer distribution which, for example, can show as transverse striations.

The field of technology to which the present invention belongs has in the foregoing been described as methods and apparatus for extruding a tubular film of polymer material under use for the circumferential equalisation of helical grooves extending in a plane or conically and formed in one or more planar or conical diepart surfaces. More specifically the invention concerns processes and extrusion dies for forming a tubular film by extruding at least one thermoplastic polymer material A by means of a circular extrusion die having at least one inlet for A and having an exit passageway ending in a circular exit orifice whereby the or each inlet is located closer to the axis of the circular die than the exit orifice and A in a molten state flows outwards towards the exit orifice, and in which process the shaping of the flow of A is established by an arrangement of dieparts having planar or conical surfaces, which dieparts are damped together whereby said surfaces are supplied with grooves shaped to form channels in manner to equalise the flow over the circumference of the exit orifice, the flow between each inlet and the exit being hereby divided into a number of part flows of generally helical form at least through a portion of each channel with space provided for overflow between said portions.

The invention is limited, as far as the method is concerned, to coextrusion of at least one thermoplastic polymer material A with at least two thermoplastic polymer materials B and C of a melt flow index (the test conditions are specified below) which is at least double that of A, B being applied on one and C on the other side of A. Hereby at least the coextrusion of A follows the process defined above, and the coextrusion is characterised in that the joining of A with B is established at the same location as its joining with C or in the immediate vicinity thereof, and that A flows outward at least immediately before it joins with B and C, while B and C flow towards each other immediately before the joining.

The coextrusion die for carrying out this process if similarly characterised, but its use is of course not limited to coextrusion of components with the defined relation between their rheologies.

The circumferential equalisation of polymer materials B and C should normally but not necessarily take place in similar way as the circumferential equalisation of A. However a good equalisation of these surface components is not always required since each may occupy less than 15% or even less than 10% of the structure, and therefore simplified and less efficient, known means of circumferential equalisation may be applied.

The indication of melt flow indices refers to the ASTM standard D 1238-90b. If the full melting range for each of the polymer materials is lower than 140°C condition E should be used (i.e. temperature of 190°C and load 2,16 kg). If the highest limit of the melting range of any of the polymer materials is from 140°C up to but less than 180°C condition L should be used (i.e. temperature 230°C and load 2,16 kg). If the highest limit of the melting range of any of the polymer materials is from 180°C up to 235°C condition W should be used (i.e. temperature 285°C and load 2,16 kg). It is not considered a practical possibility that the higher limit of any of the polymer materials will exceed 235°C.

The invention is useful in particular for coextrusion of at least one middle layer consisting of polyethylene based material having melt flow index 1 or lower according to the mentioned condition E, said middle layer or layers constituting at least 50% of the coextruded film, and surface layers of higher m.f.i. as defined above.

The invention is also useful in particular for coextrusion of at least one middle layer consisting of polypropylene based material having melt flow index 0,6 or lower according to the mentioned condition L, said middle layer or layers constituting at least 50% of the coextruded film, and surface layers of higher m.f.i. as defined above.

The condition that the part flows or channels must be of a generally helical form does not limit the invention to the regular helical form, e.g. the form following a two- or three dimensional curve defined by a point which moves at a constant angular velocity around another point in a plane or around an axis in the space, at the same time moving at a constant linear velocity and - if 3-dimensionally - with its projection on the axis also moving constantly. Although such a particularly regular form usually is very suitable for the shaping of the channels it is not needed for proper equalisation. Thus as an example, if there are many part flows, e.g. 16 or more, the "generally helical" portion of each can be very short and can then be of linear shape under small angle to the tangent of a circle defined as crossing this short linear portion and formed by rotation of a point around the die axis. Another example of an irregular but generally helical form which can be suited for the shaping of the channels, is a staggered form in which a first segment of a generally helical partflow follows a channel which is circular around the die axis, then just before this partflow would meet the adjacent partflow the channel bends to project the first mentioned partflow out into an "orbit" further apart from the die axis. Here a second segment of the channel continues circularly, later again before the two part flows would meet each other, the channel bends out to a third "orbit", and so on. As it shall be explained later such a staggered form can be advantageous, e.g. in connection with the special means for adjustment of overflow.

The first aspect of the invention is not limited to coextrusion of three polymer materials. There can be further component as stated in claims 17 and 18, and therefore the coextrusion die can have more than three sets of channels as stated in claims 52 and 53.

The part flows may extend in a generally planar manner or they may extend in a geometrical arrangement as along a circular conical surface. For constructional reasons this should preferably be a right conical surface, i.e. its genetrix is a straight line, but the genetrix can also be curved, e.g. like a parabola with its axis parallel to the axis of the die but displaced from that axis. In any case the tangent planes of the conical surface should preferably form an angle of at least 20° and more preferably 45° to the axis of the die at least over the most downstream part of said surface. In the case of a right conical surface these angles are the angles between the straight genetrix and the axis.

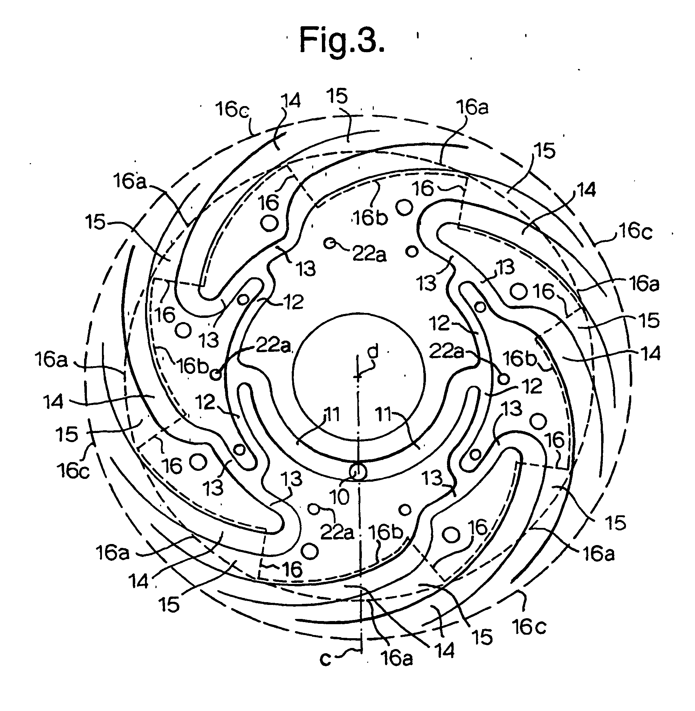

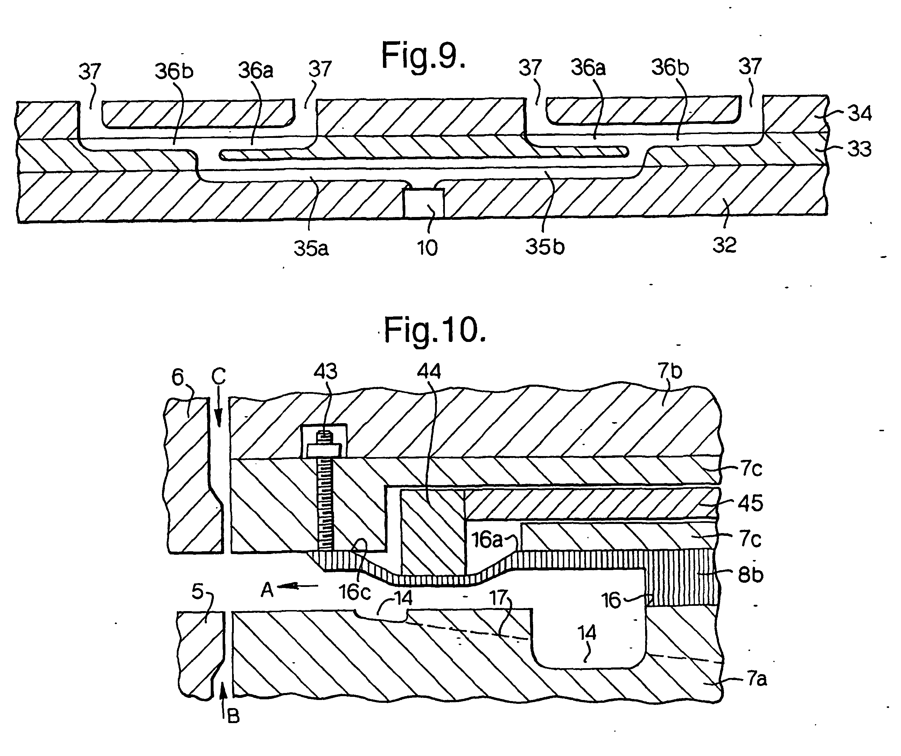

The dividing into part flows should preferably take place by the system which in US-A-4,403,934 (Rasmussen *et al*) is referred to as labyrinthine dividing, although there may be some dividing carried out by other systems prior to the labyrinthine dividing. Labyrinthine dividing is easiest understood by a reference to figs 3 and 9, the latter representing the unfolding of a circular section through three flat disc formed dieparts. Labyrinthine dividing means that a main flow branches out to two generally circularly arched equally long and mutually symmetrical first branch-flows, which together occupy essentially 50% of the circumference of the corresponding circle, whereafter each of the first branch-flows branch out to two, in similar way generally circularly arched second branch flows, these in total four second branch flows also occupying together essentially 50% of the circumference of the corresponding circle. The dividing may continue in similar manner to form 8 or 16 or 32 or even 64 part flows. There may be small modifications of the circular arrangement, e.g. the four second branch-flows may form four of the sides in a regular octagon, the eight third branch-flows may form eight of the sides in a 16-sided regular polygon, etc.

The labyrinthine dividing has first been described in US-A-2,820,249 (Colombo) in connection with extrusion coating of cylindrical items. The first description of labyrinthine dividing for extrusion of blown film and in connection with a subsequent equalisation by means of helical channels with overflow is found in the above-mentioned US-A-4,403,934 (Rasmussen *et al*).

At least a part of the channels for the labyrinthine dividing may be formed integrally with the channels for the generally helical flow between the planar or conical surfaces of said first dieparts by grooves in at least one surface of a pair of contacting surfaces.

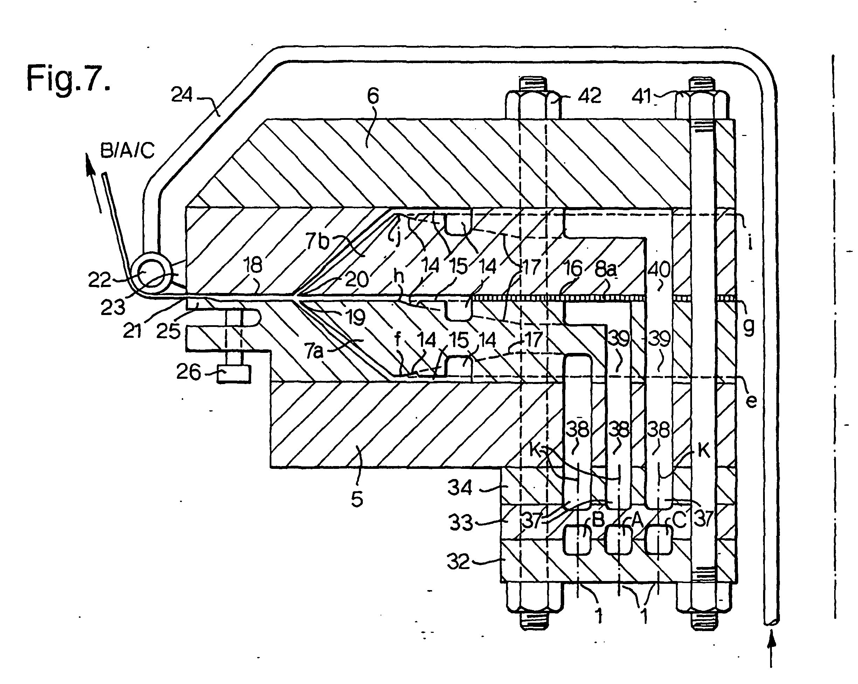

This is illustrated in fig. 3**.** Alternatively or additionally at least the beginning of said labyrinthine dividing is established by use of second dieparts having generally planar or conical surfaces, the second dieparts being damped together with the first dieparts, the arrangement of channels for said beginning of the labyrinthine dividing being established partly by grooves in contacting surfaces between said second parts or between one second part and one first part and partly by interconnecting channels through said second and/or first parts. This is illustrated in figs. 7, 8 and 9.

In any case there is preferably formed a relatively wide continuous cavity around the axis of the die. This is useful for efficient application of internal cooling air, for electrical connections, etc.

The choice between the two above mentioned types of labyrinthine dividing, or a compromise between the two, depends mainly on the diameter of the die and preferable size of the continuous cavity around the axis.

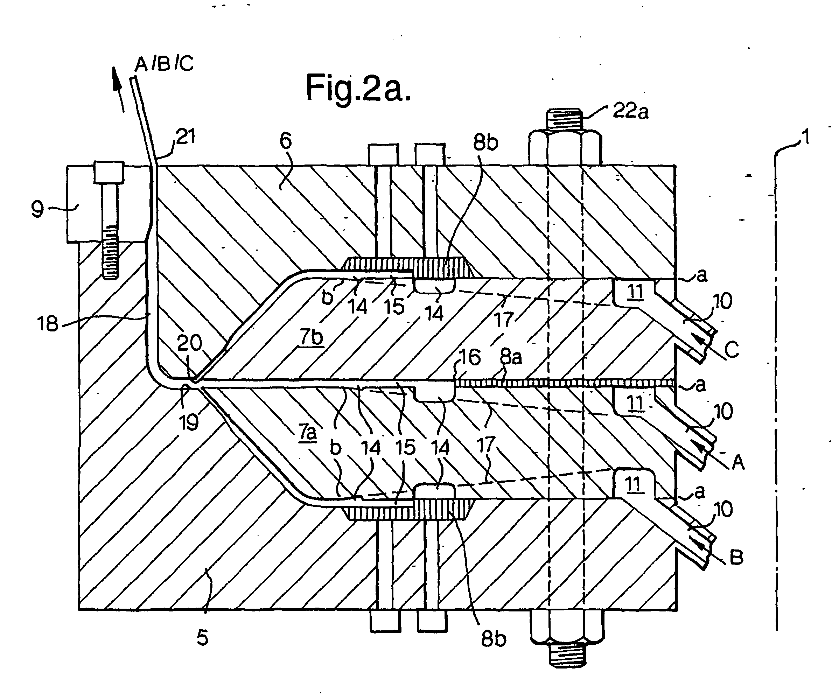

When one of the coextruded polymer materials is susceptible to thermal degradation at a temperature which is in practice required for extrusion of one of the other coextruded materials it may be preferable or necessary to provide for thermal insulation between the dieparts which form the channel systems for the two polymer materials. One example of this is the coating on both sides of HMWHDPE of m.f.i. lower than 0,1 according to the above mentioned ASTM test with an ethylene/vinylacetate copolymer. This can conveniently be carried out with a coextrusion die like the die shown in fig. 2a and fig. 3, but since a conveniently fast extrusion of the HMWHDPE requires an extrusion temperature of about 200°C or higher and the copolymer tends to degrade during passage through the die if its temperature exceeds about 180°C, it is necessary to make a suitable thermal insulation within the die between the two polymer materials. Thus with reference to fig. 2a, the disc formed diepart 7a should be divided into two disc formed half parts with thermal insulation between the two, and similarly the disc formed diepart 7b should be divided into two disc formed half parts thermally insulated from each other. The thermal insulation is preferably established by means of airspaces, i.e. one or both half parts which together form 7a or 7b are supplied with ribs, recesses, knobs or the like, exactly machined so that the parts can be firmly and exactly damped together. At the boundary adjacent to a polymer flow there must be an efficient seal to avoid material leaking in between the two half parts and destroys the thermal insulation. This seal can e.g. be a ring of Teflon (trade mark) or bronze. When the heat transfer between the half parts is minimized, the flow of middle component A will practically maintain its temperature from its inlet up to the location where it joins with the other component or components.

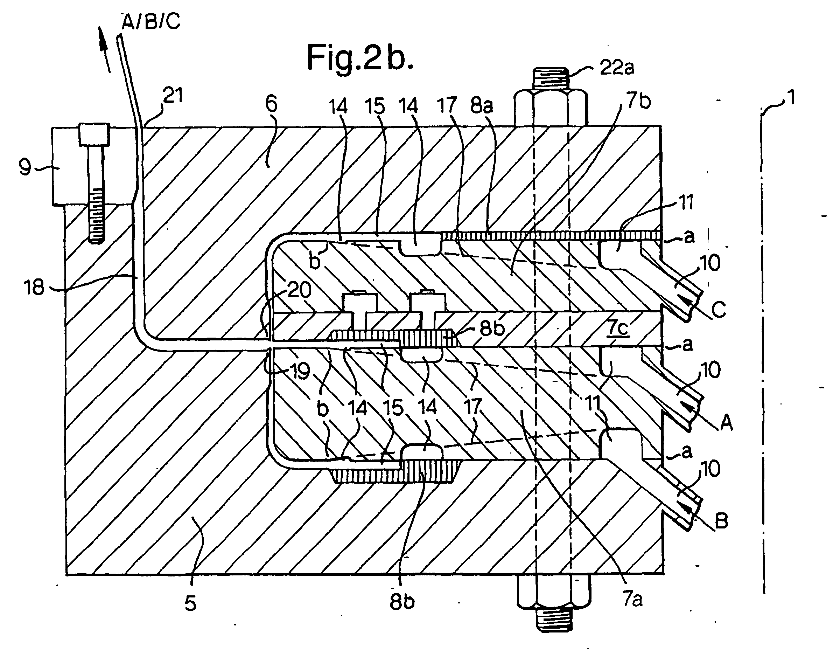

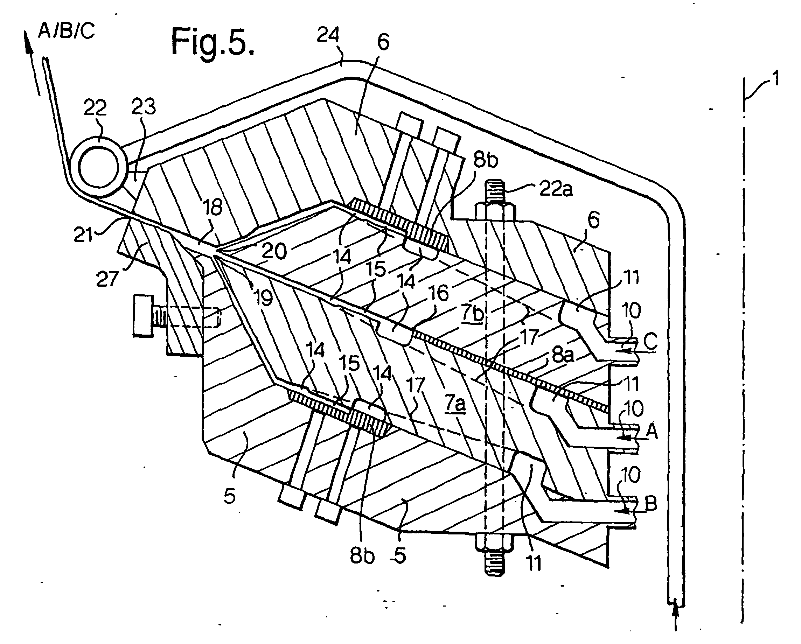

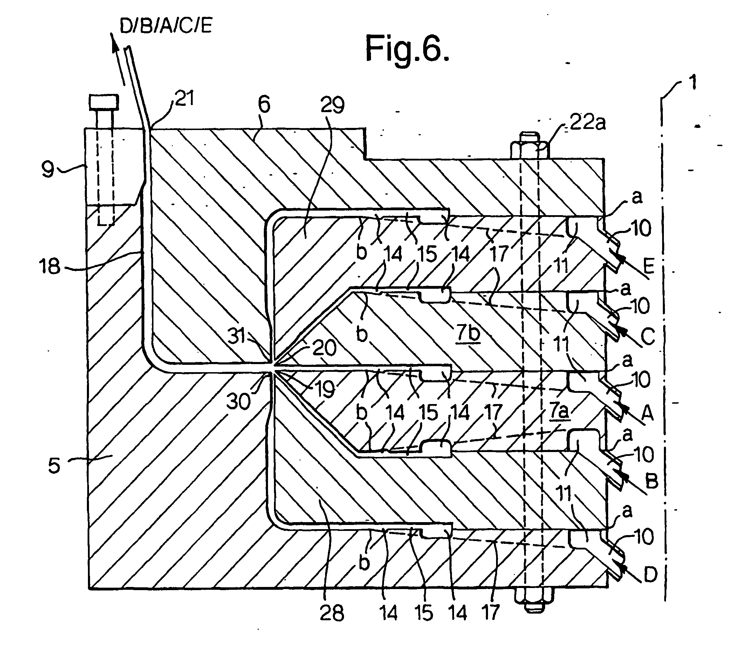

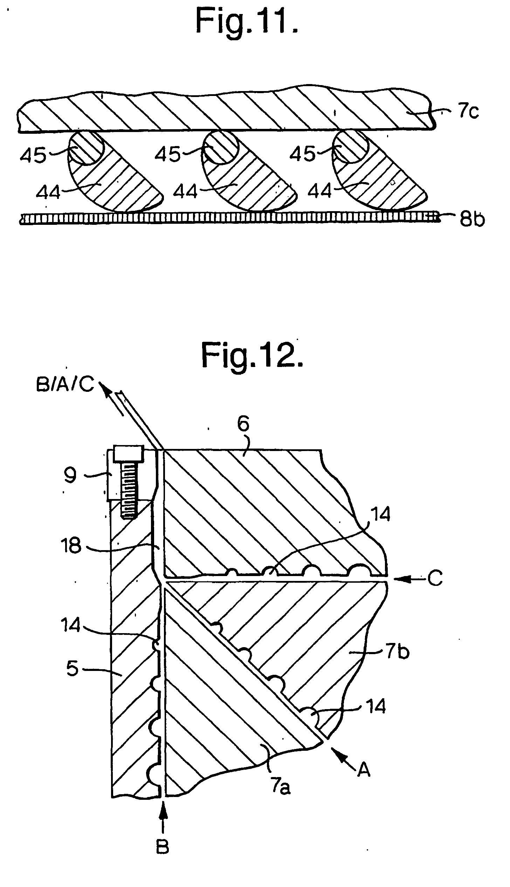

A similar thermal insulation can be arranged when the dieparts 7a and 7b are conically shaped as in fig. 5. The exit passageway may guide the common flow of the joined B, A and C further outward and then turn it in an axial direction, or the common passageway may without further outward passage immediately guide the common flow in a generally axial direction, in each case so that the joined materials flow generally axially when they meet the exit orifice. The first mentioned possibility is illustrated in figs 2a, 2b and 6, the last mentioned in fig. 12.

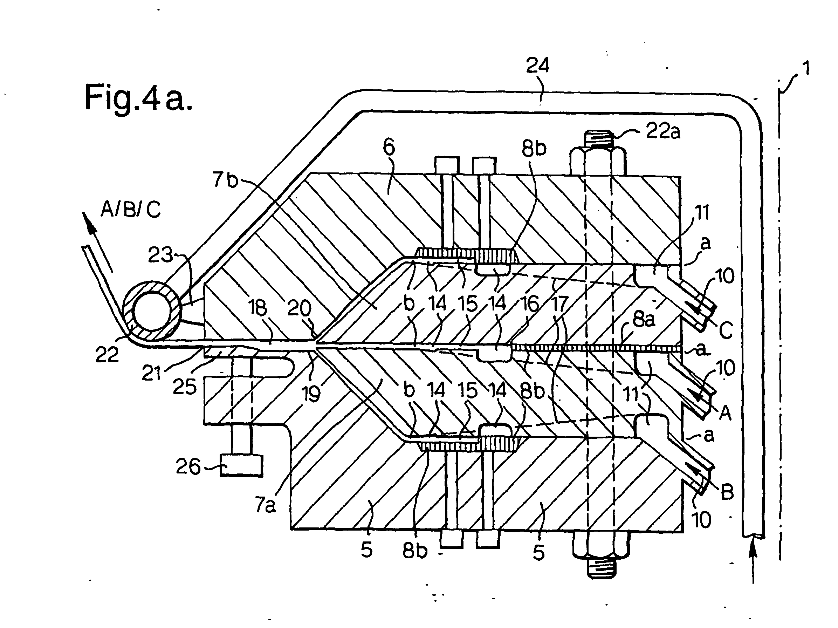

A third possibility is that the exit passageway guides the common flow of B, A and C to the peripherical surface of the die, as shown in figs. 4a, 4b, 6 and 7, but this possibility is described more detailed below.

The embodiment shown in fig. 12 is further characterised in that the helical grooves for circumferential equalisation of one surface component is formed in a cylindrical diepart surface. It could also be in two cylindrical surfaces facing each other or these surfaces could be conical but rather dose to the cylindrical shape, e.g. their genetrix could form an angle of no more than 30° to the axis. In this way it becomes practically possible to make the common exit passageway cylindrical right from its start and therefore minimize its length and the pressure drop in the material from the time of joining to the exit orifice. This pressure drop has importance for the circumferential equalisation of the surface components when their melt viscosities are significantly lower than that of the middle component, a low pressure drop being preferable.

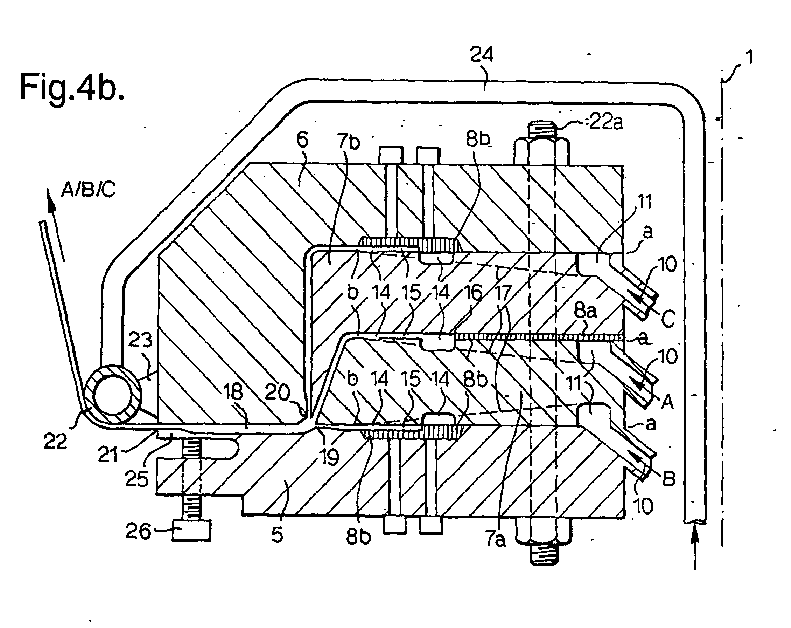

The embodiment of the invention which is illustrated in figs. 4a, 4b and 5, is characterised in that the exit passageway conducts the molten material right to the peripherical surface of the die, where the exit orifice is located, and the tubular film leaves the exit orifice under an angle of at least 20° to the axis of the die, and an adjusted overpressure is applied inside the tubular film to establish the desired diameter of the tube while it is drawn down and solidified. Expressly disclaimed is therefore the application of a similar assembly of dieparts to make a tube, which immediately upon leaving said parts is delivered to the to the inside of a conveying mold as in WO-A-00/07801 (Neubauer). According to this embodiment of the invention the tubular film leaving the die from its periphery may directly be blown as it is normal in the extrusion of a tubular film by the inside air which is kept under an overpressure, feedback controlled from an automatic registration of the diameter, while the film is drawn down in thickness and drawn away in the axial direction by conventional means (driven rollers, collapsing frame etc). However, most preferably the tubular film which in molten state has left the peripheral surface of the die, should meet a ring which is concentric with the die and in fixed relation to the latter, so that the angle between the axis of the die and the direction of movement of the film is reduced and a frictional force is set up between the ring and the film to assist in a molecular orientation of the film, while the latter is drawn over the ring. This feature makes it possible to achieve a higher longitudinal orientation than achievable by conventional extrusion of blown film, and is in particular useful when the polymer material contains high amounts of a high molecular weight material, e.g. contains at least 25% HMWHDPE of m.f.i. = 0.1 or lower (the above mentioned ASTM test, condition E) or at least 25% polypropylene of m.f.i. = 0.6 or lower (the above mentioned ASTM test, condition L).

The achievement of a higher degree of longitudinal orientation in connection with the extrusion ("meltorientation") is important e.g. when the film is used for manufacture of cross-laminates. For this application the tubular film can be cut in a helical manner prior to lamination, in well-known manner, and can be further oriented at different stages of the manufacturing process, as it also is well-known, see e.g. EP-A-0624126 (Rasmussen).

In addition to the advantage that the melt orientation is improved due to the arrangement of the ring, this embodiment of the invention has the advantage that the channels from termination of the circumferential equalisation to the exit orifice, and in case of coextrusion from the location of joining of the different polymer materials to the exit orifice, can be reduced to a minimum.

The above mentioned ring is preferably round at least on the part of the surface which contacts the film, and is preferably mounted in the immediate vicinity of the exit orifice. It should preferably be thermally insulated from the hot dieparts either by being mounted through a thermally insulating material or by support means which pass through the hollow space around the centre of the die.

The ring should preferably be cooled in order to avoid the tubular film adhering too strongly to it, but in the case of particularly thick film this is not always necessary. The cooling can be by means of circulating water or oil of a suitable temperature. If the surface of the ring has a temperature below the lower limit of the melting range of the polymer material which is contacts, a thin region of the film will solidify and can thereby avoid or reduce the tendency to adhesion. This solidification will normally be temporary so that the thin region of the film melts again when the film has left the ring. A person skilled in the art may decide how the cooling conditions best are adjusted (or if cooling is needed at all) to achieve the optional orientation whilst minimising the risk of production stops due to adhesion of the film to the ring. The circulation of the cooling medium can preferably be by leading the medium in and out through a suitable number of pipes which pass through the hollow cavity around the axis of the die.

By means of such a ring close to the die the coextrusion may conveniently be carried out without joining the polymer materials inside the die, but letting them fuse together while they meet on the ring.

In the case of the manufacture of a very thin film or a film which also at room temperature has a surface having high coefficient of friction, cooling of the ring may not be enough to avoid too much adhesion or excessive friction seen in relation to the strength of the film while the latter passes over the outside of the ring. In such case the ring may be adapted to carry the film on an "air pillow", i.e. pressurized air is blown into the film from an inside space in the ring through closely spaced fine holes in one or more circular arrays around the part of the ring which is directly adjacent to the film. The details in the construction of such a ring adapted for carrying the film on air will be within the capability of a person familiar with "air pillow" technology. This air is preferably cooled air so that it also acts as an efficient medium for internal cooling.

The ring must be adapted for efficient circumferential equalisation of the flow of compressed air before this air meets the circular array or arrays of fine holes. It is preferably conducted from the compressor and the refrigerator through one or preferably more pipes going through the hollow cavity around the axis of the die, and it leaves the die through at least one other pipe connected to the inner of the film bubble. (The cavity around the axis of the die is of course closed off from the environment so that an overpressure can be maintained inside the bubble). There is a valve at the outlet of this air to control the pressure in the bubble.

Independent of the feature that the tubular film passes over the described ring - as it should normally do - a further development of this embodiment of the invention is characterised in that at least one side of the exit orifice is defined by a lip which is sufficiently flexible to allow adjustment of the gap of the orifice and that devices are provided for this adjustment.

It is immediately understandable that such an adjustment is possible and very practical when the exit passageway is planar nearby and up to the exit orifice, since in that case the circular die is comparable to a flat die and in flat dies the overflow from the exit orifice is almost always adjusted similarly. However, some conicity in the exit passageway is permissible even immediately before the latter meets the exit orifice. The question how much conicity is permissible depends on details in the construction but can be decided by a skilled constructor. However, in any case a conically shaped passageway can be planed out shortly before it meets the exit orifice.

Another embodiment of the invention is characterised in that said overflow between the part flows is adjustable by exchangeable inserts between said dieparts or by a positionally adjustable apparatus part opposite the grooves. As it is illustrated in figs. 2a, 2b, 4a, 4b, 5 and 7 and further explained In the description to fig. 2a, the exchangeable insert can be an insert-shim (8a) by' means of which the distance between the two channel forming dieparts can be regulated, shaped in such a manner that it prevents overflow between channel parts where such overflow must be prevented and allows it where it is wanted. When the flow pattern is as shown in fig. 3 (which corresponds to fig. 2a) the upstream limit of the area where overflow is desired should preferably be serrated or staggered as illustrated by the broken lines (16) with connected broken circle segments (16b), otherwise there would be overflow areas where the flow would be stagnant. Consequently, with such a pattern of the grooves the boundary of the insert-shim (8a) preferably has such serrated or staggered form.

In the foregoing it has been mentioned that the form of the channels between which there is overflow can have a staggered form in which a first segment of a generally helical partflow follows a channel which is circular around the die axis, then just before this partflow would meet the adjacent partflow the channel bends to project the first mentioned partflow out into an "orbit" further apart from the die axis etc. etc. This is a suitable pattern of the generally helical flow for the purpose of avoiding "dead" areas, and at the same time utilizing the optimum dieparts. In this case the downstream boundary of the insert-shim can be circular.

However in the best form of such staggered helical grooves they gradually change from "orbit" to "orbit" from the circular form with generally radical connections between, to a form which is continuously helical, i.e. in one or a few "orbits" the form is circular, then it becomes regularly helical with increasing inclination relative to the circle from "orbit" to "orbit" and with reducing lengths of the generally radial connections.

Alternatively the exchangeable insert can be a cavity-filling insert. In this embodiment without the insert there is provided a space for overflow which is, but this space is partly filled by the exchangeable insert. This is illustrated by insert (8b) in figs. 2a, 2b, 4a, 4b and 5.

Instead of using exchangeable inserts, the overflow between the part flows can as mentioned be controlled by a positionally adjustable apparatus component opposite the grooves. It is preferably a continuous adjustment. Such a component can comprise a flexible flat generally annular flexible sheet which at its inward and outward boundaries is fixed to a stiff diepart forming part of the channel system, or can comprise a stiff flat generally annular plate which at its inward and outward boundaries is hinged through a flexible generally annular flexible sheet to such stiff diepart, in each case with a circular row of adjustment devices on the side of the flat generally annular sheet or plate which is opposite to the flow. The flexible sheet is preferably a metal sheet which may be integral with such stiff diepart.

This is further explained in connection with figs. 10 and 11. Instead of using tumable taps for the adjustment as shown in these drawings there can of course be used other means such as screws or wedges.

The invention shall now be described in further detail with reference to the drawings.
Fig. 1 illustrates the prior art. It shows an axial section of a coextrusion die for five components and is based on WO-A-98/00283.
Fig. 2a, which must be studied in conjunction with fig. 3 shows the axial sections indicated by c-d in fig. 3. It represents an embodiment of the present invention in which each system of helical distribution channels for three components, which become joined in the die, is integral with a preceding labyrinthine dividing system, and in which the channels of these systems are formed by grooves in clamped-together discs. It furthermore shows the exit passageway turning the common flow, so that the direction of extrusion becomes axial at the exit, and shows two different types of inserts for adjustment of the overflow between the helical grooves.
Fig. 2b, which is a similar view as fig. 2a, shows small modifications of the die illustrated in fig. 2a.
Fig. 3 shows the three sections perpendicular to the axis (1) which in figs. 2a, 2b, 4a, 4b and 6 are indicated by a-b. Fig. 3 illustrates the grooves for labyrinthine dividing, and integral herewith helical grooves for equalisation. The sections shown in fig. 3 do not extend beyond the outer limit (16c) of the spiral distribution system.
Fig. 4a, which is a similar view as fig. 2a, represents an embodiment of the invention which deviates from that shown in fig. 2a in the terminal part of the passage through the die which here takes place generally along a plane perpendicular to the axis (1) and ends at the circumference.of the die. The drawing also shows the extruded film being turned over a cooled ring immediately after its exit from the die and shows one lip of the exit orifice being flexible and adjustable.
Fig. 4b is essentially similar to 4a but showing a modification in the arrangement of the flow-together of the three components.
Fig. 5 is generally similar to fig. 4a except that in fig. 5 the channels are formed in conical instead of plane surfaces.
Fig. 6 is a similar view as fig. 2a but showing coextrusion of five components.
Fig. 7 which must be studied in conjunction with figs. 8 and 9 is the axial section indicated by e-f in fig. 8. It is generally similar to fig. 4a except for the construction of the labyrinthine dividing system. In fig. 7 this dividing begins in grooves formed in the surfaces of additional discs, which are clamped to the discs carrying the grooves for the last step of labyrinthine dividing and the helical grooves.
Fig. 8 represents the axial section e-f indicated in fig. 7 and apart from the inlet region it also represents sections g-h and i-j. It shows the grooves for the last step of the labyrinthine dividing and integral herewith the helical part of the grooves.
Fig. 9 is an unfolding of the circular section formed by rotating each of the lines k-l in fig. 7 around the die axis (1). It shows the first two steps of the labyrinthine distribution.
Fig. 10 is a detail sectional drawing - a similar view as in fig. 2b but enlarged - showing devices for positional adjustment of the overflow between the helical grooves in substitute of the exchangeable insert for component A shown in fig. 2b.
Fig. 11 is an unfolding of the circular section formed by rotating the line m-n in fig. 10 around the die axis (1).
Fig. 12 which also is an axial section, but for the sake of simplification limited to the last part of the channels, represents a modification of the die of fig. 2a, showing the helical grooves for one surface component formed in a cylindrical surface, the helical grooves for the other surface component formed in a planar surface, and the helical grooves for the middle component formed in a conical surface, and further showing the common exit channel directed axially all the way from the internal orifices to the exit orifice.

The prior art die shown in fig. 1 has axis (1) and consists of clamped together discs and shell- or bowlformed parts. Thus (2a) and (2b) together form a shell or "bowl", and (3a) to (3i) are discs fitting into this "bowl". Five components are fed into the die for coextrusion, of which the inlets for two are shown. Apart from the inlet channels all channels for the five components and the common flow of two or more of these components are formed by spaces between the disc- or shell ("bowl")-formed parts, thus the equalisation of each component over the circumference is established by helical grooves (4a) to (4e) which extend generally along a plane perpendicular to the axis (1) and here are seen almost in cross-section. These grooves are formed in the surface of one of a pair of adjacent discs or between the "bowl" and the adjacent disc. (Alternatively there might be grooves in both surfaces facing each other and this is also covered by the present invention).

The different helical grooves for each component are fed from one, generally circular, common feeding channel. This is all prior art.

As the drawing shows there is arranged an overflow between the different parts of each groove (the parts which are adjacent when seen in axial section) or if there are several grooves for each component, (which is also prior art) between the different adjacent grooves. Each groove starts relatively deep but gradually becomes shallower to end at zero depth. The proportions between the different dimensions in such a spiral distribution system is critical for the equalisation of the flow over the circumferences and depends critically on the rheological parameters of the extruded melt under the given conditions of temperature and throughput.

As already mentioned, this construction of an extrusion die has the advantage that it allows coextrusion of many components, but has the drawback that these components must have relatively similar rheologies, otherwise the thickness of the individual layers become uneven. This is because the different components are successively joined one after the other, with a relatively long distance between the locations of joining. It should hereby be understood that the high extrusion pressure requires that each disc from which the die is constructed must be relatively thick. However, as already stated, if there is a high viscosity in one component contacting one channel surface and a much lower viscosity In a second component contacting the opposite channel surface, the common flow will soon become irregular.

In the embodiment of the invention which is shown in figs. 2a and 3, and with some small modifications in fig. 2b, the circular die having axis (1) is made from two shell (bowl) - formed parts (5) and (6), two disc-formed parts (7a) and (7b), and in fig. 2b a further disc formed part (7c), three inserts (8a) and (8b) for adjustment of the overflow between the helical channels, and a ring (9) for adjustment of the exit orifice.

The molten thermoplastic polymer material (A) of a relatively high melt viscosity and two thermoplastic materials (B) and (C) of a lower melt viscosity are fed through separate inlets (10). They divide out in a "labyrinthine" channel system, first branching out to two part flows in channel (11), then continuing as four part flows in channels (12) and as eight part flows in channels (13). (Depending on the dimensions of the die there can of course be formed a larger or smaller number of part flows but in any case an integral power of 2).

In direct continuation of the "labyrinthine" dividing, the part flows in (13) continue in a helical distribution system, through grooves (14) whereby a proper balance is established between the flows through the spiral grooves (14) and an over-flow between the latter, which takes place in narrow gaps in the spaces (15), the beginning of which are shown in fig. 3 by broken lines (16).

The inserts for adjustment of over-flow will be described below. The broken circle (16a) in fig. 3 has relation to the devices for continuous adjustment of the overflows shown in figs. 10 and 11 and does not concern the dieparts shown in figs. 2a and b.

The broken lines (17) in figs. 2a and b indicate that the channels which are seen almost in cross-sections are connected outside the section which is represented in these drawings.

Having passed the helical equalisation system of channels, A, B and C proceed towards the common circular exit channel (18) whereby B and C pass internal orifices, (19) and (20) respectively, to join with A. The two internal orifices are immediately opposite each other at the same axial location (or there may be an insignificant axial distance between the two). The common channel ends in exit orifice (21).

In fig. 2a both B and C meet A under a pronouncedly acute angle, which in some cases has rheological advantages, while they both run perpendicularly towards A in fig. 2b. This solution can be chosen, for example if there is a need to shorten the diameter of the exit orifice. The tubular coextruded flow B/A/C passes out of the circular exit orifice (21) and having left the die it is drawn down and blown in conventional manner. The arrangement and functions of the adjustable lip-ring (9) will be explained below.

The shell- and disc-formed dieparts (5), (6), (7a), (7b) and in fig. 2b, (7c) are screwed together by means of two circular rows of bolts (22a) and (22b). (In figs. 2a and b only one such bolt is shown). The exact fitting together of these parts may be secured by means of recesses (not shown).

In fig. 2a (but not in fig. 2b) the overflow between the helical grooves for component A is adjusted by means of the insert-shim (8a), mentioned above. Several such insert-shims with different thicknesses should be available for the adjustment. The thinnest could conveniently be e.g. 0.5 mm and the thickest 3 mm, while the depth of the helical grooves (14) conveniently can be e.g. between 5-20 mm at their start. The inward limitation of (8a) is circular, while its outward limitation is serrated as defined by the broken lines (16) and broken circle segments (16b) in fig. 3. The insert-shim (8a) is held in position by bolts (22a) and (22b) and preferably also by recesses. Thus it makes each groove for "labyrinthine" dividing and the beginning of each helical groove a closed channel, while the rest of each helical groove becomes open for overflow. As it will be understood from study of fig. 2a, the thickness of this insert-shim will also have an influence on the thickness of flow of A where this component meets B and C, or in other words on the gap of the "internal orifice" for A. However, when the intent is to use the die for joining an A of higher melt viscosity with B and C of much lower melt viscosities, and especially if the throughput of A also should be higher than the throughputs of B and C, the gap of the internal orifice for A will in any case conveniently be larger than the gap of the internal orifices for B and C (as it is Well-known in the art), and therefore relatively small variations in the gap of the internal orifice for A will normally be inessential. Typically the gaps of the internal orifices for B and C will be between 0.5-1 mm, while the gap of the internal orifice for A typically will be between 2-4 mm.

Since variations in thickness of insert-shim (8a) cause different axial positions of shell-part (5) relative to shell-part (6), (8a) may disturb the outflow from the exit orifice (21) unless compensation is made for these differences. This is done by means of exchangeable lip-rings (9) of different axial lengths corresponding to the different thicknesses of the insert-shim (8a). The lip-ring (9) is adjustable in its centering relative to the shell-part (5). It is fixed to (5) by a circular row of bolts, the bolt-holes in the lip-ring (9) being large enough to allow this adjustment.

In fig. 2b the overflows for component C are adjusted by a similar insert-shim (8a). This is possible because as shown in this figure, both walls of the internal orifice (20) for component C are cylindrical as shown, and therefore small changes in the axial position of shell-part (6) relative to disc (7b) will not have any significant influence on the joining of C with A. Contrarily to this such insert-shim (8a) normally cannot be used when the walls of the internal orifices are pronouncedly conical as the walls of the internal orifices (19) and (20) in fig. 2a.

For adjustment of the overflow, i.e. gap (15), for components B and C in fig. 2a, another type of exchangeable insert, namely the cavity-filling insert (8b) is used. This does not have any influence on the gaps of the internal orifices (19) and (20). Similar inserts are shown in fig. 2b for components A and B, but here it would have been possible to use insert-shim (8a) for all three components.

While the insert-shim (8a) adjusts the overflow by adjusting the distance between adjacent shell- or disc formed dieparts, the cavity-filling insert (8b) adjusts the overflow by filling up to a greater or lesser extent a hollowed-out space in one disc or shell located *vis-a-vis* the helically grooved section in the adjacent disc or shell.

The cavity-filling insert (8b) may, like the insert-shim (8a), start immediately at the inlet to the "labyrinthine" dividing system for the respective component, but can also as shown, start at a later stage. In figs. 2a and b, insert (8b) is shown screwed to parts (5), (6) or (7c).

A modification of the cavity-filling insert, constructed to allow an adjustment of the overflow, normally continuously without disassembling the die, is as mentioned above shown in figs. 10 and 11 and will be described later.

As it appears from the drawings, there is preferably provided a relatively large continuous hollow space extending from the die axis (1) to the innermost cylindrical surfaces of the clamped-together dieparts (which surfaces may e.g. be conical instead of cylindrical). This space can be very useful e.g. to establish an efficient internal cooling of the extruded tubular film.

In order not to make the study of the drawings too difficult, they are simplified on several points. Thus the dimensions of the grooves in the labyrinthine dividing and the helical overflow systems are shown identically for A, B and C, although the die is primarily designed for coextrusion of relatively thin surface layers of B and C on a thicker middle layer of A. To avoid unnecessarily long dwell times for B and C, the channel systems for each of these components should therefore preferably each have a lower volume than the channel system for component A. Furthermore it is of course not practical that the inlets (10) for each of the three components pass along the same axial plane, they should be axially, e.g. angularly, separated from each other, and the inlets should preferably not take place through pipes which protrude into the central cavity of the die as shown in figs 2a and b but should be formed as bores through the discs or shells. Heating elements are not shown. The helical part of the grooves are shown extraordinarily short.

Finally the drawings do not show any drainage system, which is normally indispensable when channels for the extrusion are formed between clamped-together dieparts. Without a suitable drainage unavoidable leakages may build up too high pressures between the dieparts. Since such drainage is well-known in the art it is not further described here.

In fig. 4a the construction of the die is shown identical with that of fig. 2a up to the exit passageway (18), but while in fig. 2a this passageway makes a 90° bend to extrude the composite B/A/C flow axially, this flow proceeds radially out in fig. 4a, and the exit orifice (21) is located at the periphery of the die. Having left the exit orifice, the molten tubular B/A/C film is turned over the cooled ring (22) and is hauled off, blown and aircooled by conventional means (not shown). The ring (22) is directly fixed to the shell-part (6) of the die through a heat insulating material (23). The ring (22) is hollow, and the cooling takes place by circulation of water or oil, which may be temperature controlled. This cooling medium is pumped into and out of (22) through pipes, of which one (24) for the inlet is shown. These pipes are preferably passed through the cavity in the region around the axis of the die.

One of the circular lips (25) of the exit orifice (21) is preferably made flexible as indicated and is made adjustable by means of a row of screws of which one (26) is shown. Such adjustment is well-known from the construction of ordinary flat dies, and in fact the die of fig. 4a can be considered a flat die, although the exit orifice (21) is not straight but circular. Screw (26) is shown pressing on the lip of the die (25), but there can also be screws pulling the dielip, however the pressure in the melt may give a sufficient opening force to avoid any screws which pull. Alternatively, there may be used devices which control the gap by means of thermally expanded elements. Such devices are known from other die constructions and are used especially for automatic avoidance of gauge variations by feed-back of automatic measurements of the gauge over the width of the extruded film.

It is clear that the flexibility needed for adjustment of exit orifice (21) will not cause any problem when the flow at the exit is directly radial, however it should be noted that this flow may to some extent be conical without detracting from the adjustability. In this connection it depends on details in the design how much conicity is permissible, but this can easily be decided by a constructor skilled in the art.

The purpose of fig. 4b is to show a variation of the design according to the invention, in which it is not component A but one of the surface components for the coextrusion, here component B, which flows in a planar, radial manner upstream of the internal orifices (19) and (20), while both A and C flow angularly to these orifices. Still the arrangement is such that as stated in claim 1, A flows outward relative to the axis (1) of the die (although not in planar, radial manner) immediately before it meets with B and C, while B and C flow towards each other immediately before the joining.

The,conical shape of the dieparts shown in fig. 5 can as it already has been mentioned be advantageous, especially if the exit orifice (21) has a large diameter, since the conical form acts mechanically stabilising against the high melt pressures, and therefore allows that the clamped-together dieparts can be made thinner.

A presentation analogous to that of fig. 3 is omitted because the conical shape would make it rather complicated, and fig. 3 gives a sufficient understanding also of the channel shapes in the die of fig. 5.

Apart from the conical forms, the die of fig. 5 is generally similar to that of fig. 4a, with the exit orifice (21) arranged at the periphery, and a cooling ring (22) fixed to the die for turning the molten tubular B/A/C film. There is shown an exchangeable insert-shim (8a) similar to (8a) in figs. 2a, 2b, 4a and 4b, except for its conical shape with the downstream front surfaces (16) and (16a) - the latter not shown here but in fig. 3 - parallel to the axis (1).

Instead of the flexible lip (25) in fig. 4a with the screws (26) for adjustment, there is an exchangeable exit ring (27) which can compensate for different thicknesses of the exchangeable insert-shim (8a) and also, by small displacements upwards and downwards, can provide a proper mutual centering of the two surfaces of the extruded tubular material. For the sake of simplification there is not shown any cavity-filling insert like (8b) in figs. 2a, 2b, 4a and 4b, but such inserts may be present.

In fig. 6 there are shown two further shell ("bowl")- formed dieparts (28) and (29) in addition to the five shell- or disc-formed parts (5), (6), (7a) and (7b) in fig. 2a. Channels are established in these parts for labyrinthine dividing and helical-groove equalisation of two further molten polymer materials D and E, namely between dieparts (28) and (7a) for D and between dieparts (7b) and (29) for E, these channels terminating in the internal orifices (30) and (31), which are immediately adjacent to the internal orifices for B and C (19) and (20). Fig. 3 is also relevant for the understanding of this drawing. There is not shown any insert for adjustment of the overflow between the helical grooves, but if desired such inserts can of course be provided like the inserts (8a) or (8b) described above. If B has a melt viscosity close to that of D, these two flows may if desired by joined with each other well before the coextrusion with A, or B can be joined to D after the joining of D and A. Similar applies to the joining of C with E.

The die shown in figs. 7, 8 and 9 comprises, compared to that of fig. 4a, the additional discs (32), (33) and (34). From the inlets (10), here a hole in (32), each of the molten polymer materials A, B and C divide out on the two channel branches (35a) and (35b) - see fig. 9 - which here is shown as grooves in both (32) and (33), but it could be a groove in one part only. From each end of these branches each component passes through a hole in the disc (33), and at the other surface of (33) each of the two part-flows divide out into two part-flows (36a) and (36b), in total four branches, so that each component A, B and C now has become four part-flows. At the end of each of the four branches each component passes through a hole (37) in (34) which leads into the dieparts (5), (7a) and/or (7b).

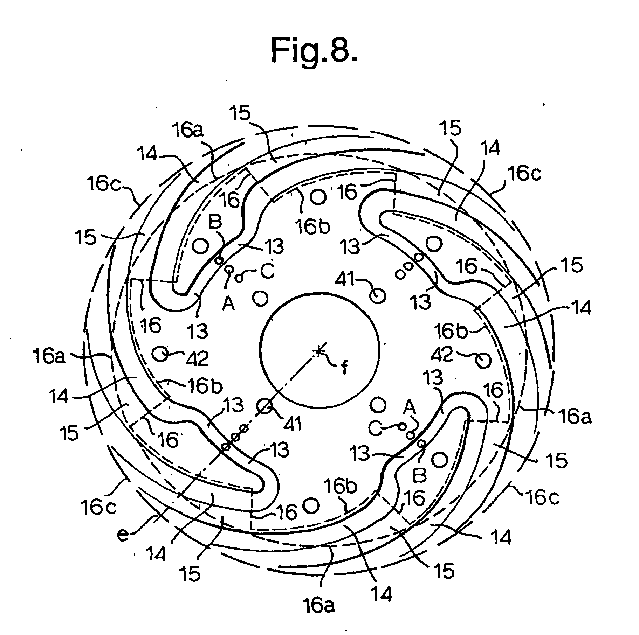

Each hole (37) continuous as a bore (38) through shell-part (5), see fig. 7. For component B the bores (38) directly form the four inlets to the system of grooves between (5) and (7a). For component A and C the bores (38) are continued as bores (39) through (7a). For component A the bores (39) directly form the four inlets to the system of grooves between (7a) and (7b). For component C the bores (39) are continued as bores (40) through (7b), and these bores directly form the four inlets to the system of grooves between (7b) and (6). Since the sections e-f, g-h and i-j are considered ideritical except for the inlets fig. 8 does in fact show the continued system of flow of each component B, A and C. The dieparts (5), (7a), (7b), (6) and the insert-shim (8a) are clamped together by the two circular rows of bolts (41) and (42).

As shown in fig. 8 each of the four part flows divide out into two, so that each component forms a total of eight part-flows, see fig. eight and these eight part-flows proceed through the helical grooves with overflow. Alternatively, not only the four but all eight part-flows of each component may be formed by labyrinthine dividing upstream of the dieparts (5), (7a) and (6), or it may be advantageous, especially for dies,of a large exit orifice diameter, to divide to more than eight part-flows, e,g. to 16 or 32 part-flows. The disc of figs. 7 to 9 has its exit orifice (21) in the peripherical surface.

In figs. 10 and 11 the cavity-filling insert (8a) has a flexible annular zone extending between a circular inner limit (16a) and a circular outer limit (16c). (16a) in this figure corresponds to (16a) in fig. 3 and (16c) corresponds approximately to the end of the helical grooves. Upstream (inward relative to the die axis) and downstream of this flexible annular zone the insert (8b) is stiff, thus the flexible zone can be considered an annular membrane. The stiff part on the downstream side, i.e. outward of limit 8c, is fixed to the adjacent die-disc (7c) by a circular row of bolts welded to the insert (8b), of which one (43) is shown.

The pressure in component A pushes the membrane part of (8b) towards a circular row of spirally curved taps (44) each on a turnable shaft (45) which is nested in a bore in the die disc (7c). There are many such shafts with taps, and they extend in a star-like manner through the disc (7c). By turning these shafts the position of the membrane and thereby the overflow between the helical grooves can be continuously adjusted. The means for turning the many shafts (45) and coordinating, and fixing their positions (e.g. under use of spindles and spindle wheels) are not shown.

In fig. 12, the equalisation of B takes place between the inside cylindrical surface of (5) and the outside cylindrical surface of (7a) the former supplied with helical grooves (14). The equalisation of A takes place between the inside conical surface of (7a) and the outside conical surface of (7b), the latter also supplied with helical grooves (14). And the equalisation of C takes place between the opposite surface of (7b), which is substantially planar, and a planar surface in (6) supplied with helical grooves. What cannot be seen in the drawing is that (5) and (7a) are formed like "bowls" except that they are annular since the die preferably should have a continuous cavity around its centre. Similarly (6) is an annular disc and (7b) is an annular truncated cone. These four dieparts are bolted together in a similar manner to that shown in most of the other drawings, and upstream of the helical grooves, A, B and C are divided into part flows by labyrinthine dividing in a similar manner to the dividing shown in other drawings. The internal orifices which lead the flow of materials B and C into the flow of A are almost directly facing each other, and for rheological reasons it is also preferable that the length of the common channel (18) from these internal orifices to the exit orifice is as short as practically possible.

## Claims

1. A process of forming a tubular film by coextruding at least one thermoplastic polymer material A with at least two thermoplastic polymer materials B and C of a melt flow index which is at least double that of A, B being applied on one and C on the other side of A, said extrusion being carried out by means of a circular extrusion die having at least one inlet (10) for each component and having a common exit passageway (18) ending in a circular exit orifice (21) whereby the or each inlet is located closer to the axis (1) of the circular die than the exit orifice and the extrudable materials in molten state flow outwards towards the exit orifice, and in, which process the shaping of each flow of each component is established by an arrangement of first dieparts (5, 6, 7a, 7b) having planar or conical surfaces, which dieparts are clamped together with said surfaces supplied with grooves (14) shaped to form channels (11, 12, 13, 14) for the flow of each polymer material in manner to equalise the flow over the circumference of the exit orifice, whereby at least the flow of A between the or each inlet and the exit is divided into a number of part-flows (14) of generally helical form at least through a portion of each channel with space (15) provided for overflow between said helical portions and said part flows with overflows gradually join to one common, circular flow **characterised in that** the joining of A with B (19) is established at the same location as its joining with C (20) or the immediate vicinity thereof, and that A flows outward with respect to the axis of the die immediately before it joins with B and C, while B and C flow towards each other immediately before the joining.

2. A process according to claim 1, **characterised in that** said part flows of a generally helical form extend in a generally planar manner.

3. A process according to claim 1, **characterised in that** said part flows of a generally helical form extend in a geometrical arrangement as along a circular conical surface, the tangent planes of said conical surface forming an angle of at least 20° to the axis of the die at least over the most downstream part of said surface.

4. A process according to claim 3, **characterised in that** said angle is at least 45°.

5. A process according to claim 3, **characterised in that** said surface describing the extension of the helical form is a right conical surface.

6. A process according to claim 1, **characterised in that** each said partflow is formed by labyrinthine dividing in the die of one or more flows.

7. A process according to claim 6, **characterised in that** at least a part of the channels (11, 12, 13) for the labyrinthine dividing are formed integrally with the channels (14) for the generally helical flow between the planar or conical surfaces of said first dieparts by grooves in at least one surface of a pair of contacting surfaces.

8. A process according to claim 6, **characterised in that** at least the beginning of said labyrinthine dividing is established by use of second dieparts (32, 33, 34) having planar or conical surfaces, the second dieparts being clamped together with the first dieparts, the arrangement of channels for said beginning of the labyrinthine dividing being established partly by grooves (35a, 35b, 36a, 36b) in contacting surfaces between said second parts or between one second part and one first part and partly by interconnecting channels (37, 38, 39) through said second and/or first parts.

9. A process according to claim 1, **characterised in that** said overflow between the part flows is adjustable by exchangeable inserts (8a) between first dieparts or by a positionally adjustable apparatus part (8b) opposite the grooves.

10. A process according to claim 1, **characterised in that** after joining of the flows of different polymer materials, the common flow in the common exit passageway is turned towards the axial direction or immediately proceeds in this direction to flow generally axially when it reaches the exit orifice.

11. A process according to claim 1, **characterised in that** after joining of the flow of different polymer materials, the common flow proceeds right to the peripherical surface of the die, where the exit orifice is located, and leaves the exit under an angle of at least 20 degrees to the axis of the die, and an adjusted overpressure is applied inside the tubular film to establish the desired diameter of the tube while it is drawn down and solidified.

12. A process according to claim 11, **characterised in that** having left the exit orifice the tubular film in molten state meets a ring (22) which is concentric with the die and in fixed relation to the latter, and the film is turned over the outside of the ring so that the angle between the axis of the die and direction of movement of the film is reduced and a frictional force is set up between the ring and the film to assist in a molecular orientation of the film, while the latter is drawn over the ring.

13. A process according to claim 12, **characterised in that** the cross-section of the ring is round at least on the part of the surface which contacts the film.

14. A process according to claim 12, **characterised in that** said ring is cooled by internal circulation of a cooling system.

15. A process according to claim 12, **characterised in that** said ring is mounted (23) in the immediate vicinity of the exit orifice.

16. A process according to claim 11, **characterised in that** at least one side of the exit orifice is defined by a lip (25) which is sufficiently flexible to allow adjustment of the gap of the orifice and that devices (26) are provided for this adjustment:

17. A process according to claim 1, **characterised in that** in addition to B and C, at least one further thermoplastic polymer material D exhibiting a melt-flow index at least twice that of A is joined with B or C at any stage (30) after the equalisation of the flow of said B or C.

18. A process according to claim 1, **characterised in that** coextrusion of a further component E, having the same or higher melt-flow index than A, takes place and A and E are either directly joined with each other prior to their joining with the flows of B and C, or are directly joined with each other at essentially the same location (31) as their joining with B and C.

19. A process according to claim 9, **characterised in that** such positionally adjustable apparatus part either comprises a flexible flat generally annular sheet (8b) which at its inward (16a) and outward (16c) boundaries is fixed to a stiff diepart (7c) forming part of the channel system, or comprises a stiff flat generally annular plate which at its inward and outward boundaries is hinged through a flexible generally annular sheet to such stiff diepart, in each case with a circular row of adjustment devices (44, 45) on the side of the flat generally annular sheet or plate which is opposite to the flow.

20. A circular coextrusion die for coextruding at least one thermoplastic polymer material A with at least two thermoplastic polymer materials B and C, B being applied on one and C on the other side of A to form a tubular film, said circular extrusion die having at least one inlet (10) for each component and having a common exit channel (18) ending in a circular exit orifice (21), whereby the or each inlet (10) is located doser to the axis (1) of the circular die than the exit orifice (21) and the extrudable materials are directed to flow outwards towards the exit orifice (21), and in which the shaping of each flow of each component is established by an arrangement of first dieparts (5, 6, 7, 28, 29) having planar or conical surfaces, which are clamped together with surfaces of said parts supplied with grooves (14) shaped to form channels (11, 12, 13) for the flow of each polymer material in manner to equalise the flow over the circumference of the exit orifice (21), whereby at least the flow of A (12) between each inlet (10) and the exit (21) is divided into a number of part flows (13) of generally helical form with space (15) provided for overflow between said part flows and adapted for said part flows with overflows gradually joining to one common, circular flow, **characterised in that** the joining of A with B is established at the same location as its joining with C or in the immediate vicinity thereof, and that the channels are adapted to make A flow outward with respect to the axis of the die at least immediately before it joins with B and C, and that the channels (19, 20) are adapted to make B and C flow towards each other immediately before their joining with A.

21. A coextrusion die according to claim 20, **characterised in that** said channels (11, 12) of generally helical form extend in a generally planar manner.

22. A coextrusion die according to claim 20, **characterised in that** said channels (11, 12) of generally helical form are formed in a conical surface, the tangent planes of said conical surface forming an angle of at least 20° to the axis of the die at least over the most downstream part of said surface.

23. A coextrusion die according to claim 22, **characterised in that** said angle is at least 45°.

24. A coextrusion die according to claim 22, **characterised in that** the conical surface has right conicity.

25. A coextrusion die according to claim 20, **characterised in that** each of the channels of generally helical form is shaped in continuation of a labyrinthine dividing system of channels.

26. A coextrusion die according to claim 25, **characterised in that** at least a part of the channels for the labyrinthine dividing are formed integrally with the channels of generally helical form between the clamped together first dieparts by grooves in at least one surface of a pair of contacting surfaces.

27. A coextrusion die according to claim 25, **characterised in that** at least the first part of said labyrinthine dividing system comprises second dieparts (32, 33, 34) having planar or conical surfaces, the second dieparts being damped together with said first dieparts, the arrangement of channels for said part of the labyrinthine dividing being established partly by grooves (35, 36) in contacting surfaces between said second parts or between one second part (34) and one first part (5) and partly by interconnecting channels (37, 38, 39, 40) through said second and/or first parts.

28. A coextrusion die according to claim 20, **characterised in that** the overflow between the part flows is made adjustable by exchangeable inserts (8a) in the die or by a positionably adjustable apparatus part (8b) opposite the grooves.

29. A coextrusion die according to claim 20, **characterised in that** downstream of the location for joining of the flows of different polymer materials, the channel for the common flow (18) is turned towards the axial direction, or that this channel is generally axial all the way from the said location, to direct the flow generally axially when it reaches the exit orifice (21).

30. A coextrusion die according to claim 20, **characterised in that** downstream of the location for joining of the flows of different polymer materials the channel for the common flow (18) proceeds towards the peripherical surface of the die, where the exit orifice (21) is located, and at the exit orifice said channel for the common flow (18) forms an angle of at least 20° to the axis of the die, and means are provided for drawing down the extruded tubular film while applying a controlled inside overpressure to establish the desired diameter.

31. A coextrusion die according to claim 30, **characterised by** comprising a ring (22) which is concentric with the die and in fixed relation to the latter at such a level that the tubular film can be turned over the surface of this ring by devices drawing the film generally in the axial direction.

32. A coextrusion die according to claim 31, **characterised in that** the cross-section of the ring (22) is round at least on the part of the surface which is adapted to contact the film.

33. A coextrusion die according to claim 31, **characterised by** means (24) for cooling said ring by internal circulation of a cooling medium.

34. A coextrusion die according to claim 31, **characterised in that** said ring is mounted in the immediate vicinity of the exit orifice (21).

35. A coextrusion die according to claim 30, **characterised in that** at least one side of the exit orifice is constituted by a lip (25) which is sufficiently flexible to allow adjustment of the gap and that the die comprises devices for this adjustment.

36. A coextruding die according to claim 20, **characterised in that** in addition to the total system of channels for B and C there is provided a system of channels (10, 11, 30) for coextruding at least one further thermoplastic polymer material D, said channels ending in an internal orifice (30) for joining D with B or C downstream of the channels which equalise the flow of said B or C.

37. A coextrusion die according to claim 36, **characterised in that** the location for joining D with B or C is essentially the same as the location of the joining of A with B and C.

38. A circular extrusion die according to claim 28, **characterised in that** such positionally adjustable apparatus part either comprises a flexible flat generally annular sheet (8b) which at its inward (16a) and outward (16c) boundaries is fixed to a stiff diepart forming part of the channel system, or comprises a stiff flat generally annular plate which at its inward and outward boundaries is hinged through a flexible generally annular sheet to such stiff diepart, in each case with a circular row of adjustment devices (45, 46) on the side of the flat generally annular sheet or plate which is opposite to the flow.

## Patentansprüche

1. Verfahren zur Bildung einer rohrförmigen Folie durch Koextrusion wenigstens eines thermoplastischen polymerischen Werkstoffes A mit wenigstens zwei thermoplastischen polymerischen Werkstoffen B und C mit einem Schmelzflussindex mindestens doppelter Grösse des von A, wobei B auf einer und C auf der anderen Seite von A aufgetragen wird, die Extrusion vermittels eines kreisförmigen Extrusionswerkzeuges vollzogen wird, das wenigstens einen Einlass (10) für jede Komponente und einen gemeinsamen Durchgang (18) ausmündend in einer Austrittsöffnung (21) kreisförmigen Querschnittes aufweist, wobei der oder jeder Einlass (10) näher zur Achse (1) des kreisförmigen Werkzeuges als die Austrittsöffnung angeordnet ist und bei welchem Verfahren die Formgebuntg eines jeden Komponentenflusses durch die Anordnung erster Werkzeugteile (5, 6, 7a, 7b) vollzogen wird, die ebene und konische Oberflächen aufweisen, und die Werkzeugteile mit den mit Rillungen (14) versehenen Oberflächen zusammengefügt sind, Kanäle (11, 12, 13, 14) bildend zum Durchfluss jedes polymerischen Materiales in einer Art der Vergleichmässigung des Flusses über den Umfang der Austrittsöffnung, wobei der Fluss A zwischen dem oder jedem Eintritt und dem Austritt in eine Anzahl von Teilflüssen (14) im wesentlichen spiraliger Form in wenigstens einem Abschnitt eines jeden Kanales mit Raum (15) aufgeteilt wird, der vorgesehen ist für einen Ueberlauf zwischen den spiraligen Abschnitten und den Teilflüssen, die überlaufen und allmählich dem einen kreisförmigen Fluss zulaufen, **dadurch gekennzeichnet, dass** die Verbindung von A und B (19) am selben Ort wie die Verbindung mit C (20) oder wenigstens in unmittelbarer Nähe dazu vollzogen wird und dass A in bezug auf die Achse des Werkzeuges unmittelbar bevor es auf B und C auftrifft nach aussen fliesst, während B und C aufeinander unmittelbar vor dem Auftreffen aufeinander zufliessen.

2. Verfahren nach Anspruch 1, **dadurch gekennzeichnet, dass** die Teilflüsse im wesentlichen spiralförmiger Ausgestaltung sich im wesentlichen in planarer Art erstrecken.

3. Verfahren nach Anspruch 1, **dadurch gekennzeichnet, dass** die Teilflüsse im wesentlichen spiraliger Form sich geometrischer Anordnung über eine kreisförmige, konische Oberfläche erstrecken, die Tangentialebenen der konischen Oberfläche einen Winkel von wenigstens 20° zur Achse des Werkzeuges über den überwiegenden abstromseitigen Teil der Oberlfäche bilden.

4. Verfahren nach Anspruch 3, **dadurch gekennzeichnet, dass** der Winkel wenigstens 45° beträgt.

5. Verfahren nach Anspruch 3, **dadurch gekennzeichnet, dass** die Erstreckung der spiraligen Form darstellende Fläche eine rechts konische Oberfläche ist.

6. Verfahren nach Anspruch 1, **dadurch gekennzeichnet, dass** jeder Teilfluss durch Leitflächen gebildet wird, die im Werkzeug einen oder mehrere Materialflüsse trennen.

7. Verfahren nach Anspruch 6, **dadurch gekennzeichnet**, das wenigstens ein Teil der Kanäle (11, 12, 13) für die teilenden Leitflächen integral mit den Kanälen (14) für den im wesentlichen spiralförmigen Fluss zwischen den ebenen oder konischen Flächen der ersten Werkzeugteile durch Rillungen in wenigstens einer Fläche eines Kontaktflächenpaares gebildet sind.

8. Verfahren nach Anspruch 6, **dadurch gekennzeichnet, dass** wenigstens der Anfang der Leitflächen-Teilung durch die Verwendung zweiter Werkzeugteile (32, 33, 34) mit ebenen, planaren oder konischen Oberflächen in Gang gesetzt wird, die zweiten Werkzeugteile mit den ersten Werkzeugteilen zusammengespannt sind, die Anordnung der Kanäle für den Anfang der Leitflächen-Teilung teilweise durch Rillungen (35a, 35b, 36a, 36b) in den Kontaktflächen zwischen den zweiten Teilen oder zwischen einem zweiten Teil und einem ersten Teil und teilweise durch Verbindungskanäle (37, 38, 39) durch die zweiten und/oder ersten Teile gebildet sind.

9. Verfahren nach Anspruch 1, **dadurch gekennzeichnet, dass** der Ueberlauf zwischen den Teilströmen durch auswechselbare Einsätze (8a) zwischen ersten Werkzeugteilen oder durch ein lagemässig einstellbares Vorrichtungsteil (8b) gegenüber den Rillungen einstellbar ist.

10. Verfahren nach Anspruch 1, **dadurch gekennzeichnet, dass** nach Zusammenfluss der Flüsse aus unterschiedlichen polymeren Materialien der zusammengeführte Fluss in dem gemeinsamen Fliesskanal in Axialrichtung gedreht oder unmittelbar fortfährt in dieser im wesentlichen axialen Richtung zu fliessen, wenn er die Austrittsöffnung erreicht.

11. Verfahren nach Anspruch 1, **dadurch gekennzeichnet, dass** nach Zusammenfluss des Flusses aus unterschiedlichen polymeren Materialien, der gemeinsame Fluss unmittelbar zur periphären Oberfläche des Werkzeuges, wo die Austrittsöffnung angeordnet ist, fortschreitet und den Austritt unter einem Winkel von wenigstens 20 Grad zur Achse des Werkzeuges verlässt und innerhalb des Folienrohres ein eingestellter Ueberdruck zur Bildung des gewünschten Durchmessers des Folienrohres aufgebracht wird, während es gestreckt und abgekühlt und verfestigt wird.

12. Verfahren nach Anspruch 11, **dadurch gekennzeichnet, dass** nach Austritt aus der Austrittsöffnung das Folienrohr in aufgeschmolzenem Zustand auf einen Ring (22) trifft, der konzentrisch zum Werkzeug und dazu in fester Verbindung angeordnet ist, der Film über die äussere Oberfläche des Ringes geleitet, so dass der Winkel zwischen der Werkzeugachse und der Bewegungsrichtung des Filmes herabgesetzt wird und dass eine Reibkraft zwischen dem Ring und dem Film zur Mithilfe einer molekularen Orientierung des Filmes, während letzterer über den Ring gezogen wird, eingestellt wird.

13. Verfahren nach Anspruch 12, **dadurch gekennzeichnet, dass** der Querschnitt des Ringes, wenigstens der Teil seiner Oberfläche, der in Berührung mit dem Film steht, rund ist.

14. Verfahren nach Anspruch 12, **dadurch gekennzeichnet, dass** der Ring durch ein in seinem Inneren zirkulierendes Kühlmittel gekühlt ist.

15. Verfahren nach Anspruch 12, **dadurch gekennzeichnet, dass** der Ring in unmittelbarer Nähe der Austrittsöffnung angeordnet ist.

16. Verfahren nach Anspruch 11, **dadurch gekennzeichnet, dass** wenigstens eine Seite der Austrittsöffnung durch eine Lippe (25) bestimmt ist, die ausreichend biegsam zur Einstellung des Spaltes in der Oeffnung ist, und dass Einrichtungen (26) zur Vornahme der Einstellung vorgesehen sind.

17. Verfahren nach Anspruch 1, **dadurch gekennzeichnet, dass** zusätzlich zu B und C wenigstens ein weiteres thermoplastisches Polymermaterial D mit einem Schmelzflussindex wenigstens doppelt so hoch wie der von A zugeleitet mit B oder C in jeder beliebigen Stufe (30) nach Egalisierung von B oder C vereinigt werden.

18. Verfahren nach Anspruch 1, **dadurch gekennzeichnet, dass** eine Koextrusion einer weiteren Komponente E mit einem Schmelzflussindex grösser oder gleich dem Schmelzflussindex von A stattfindet und A und E entweder direkt miteinander vor ihrem Zusammenfluss mit den Flüssen B und C vereinigt werden oder direkt miteinander vereinigt werden an im wesentlichen gleicher Stelle (31) wie ihre Zusammenführung mit B und C.

19. Verfahren nach Anspruch 9, **dadurch gekennzeichnet, dass** ein lagemässig einstellbares Vorrichtungsteil entweder umfasst ein biegsames, flaches im wesentlichen kreisförmiges Blatt (8b), das an seinen einwärts (16a) und auswärts gerichteten Abgrenzungen an ein nicht flexibles Werkzeugteil (7c) angelenkt ist und einen Teil des Kanalsystems bildet oder ein nicht biegsames flaches, im wesentlichen kreisförmiges Blatt umfasst, das an seinen einwärts und auswärts gerichteten Abgrenzungen angelenkt ist durch ein biegsames im wesentlichen kreisförmigen Blattes an ein nicht flexibles, steifes Werkzeugteil, beide Ausführungsformen mit einer kreisförmigen Reihe von Einstelleinrichtungen (44, 45) auf der Seite der flachen im wesentlichen kreisförmigen Folie oder Platte, versehen sind, die entgegen dem Fluss stehend sind.

20. Ein Extrusionswerkzeug kreisförmigen Querschnittes zur Koextrusion wenigstens eines thermoplastischen Polymer-Materiales A mit wenigstens zwei thermoplastischen PolymerMaterialien B und C, wobei B auf eine Seite und C auf die andere Seite von A zur Bildung eines Folienrohres aufgebracht wird, dieses Rundextrusions-Werkzeug aufweisend wenigstens einen Einlass (10) für jede Komponente und einen gemeinsamen Austrittskanal (18), der in eine kreisförmige Austrittsöffnung (21) ausmündet, wobei die oder jede der Eintritte (10) näher zur Achse (1) des Werkzeuges angeordnet ist als die Austrittsöffnung (21) und die extrudierbaren Materialien nach auswärts in Richtung auf die Austrittsöffnung (21) fliessend gerichtet sind, in der die Formgebung jeden Flusses aus jedem Material durch eine Anordnung erster Werkzeugteile (5, 6, 7, 28, 29) erfolgt, die ersten Werkzeugteile planare oder konische Flächen aufweisen, die zusammengespannt sind mit Oberflächen der Teile ausgestattet mit Rillungen (14) ausgebildet zur Formung von Kanälen (11, 12, 13) zum Fliessen jedes polymerischen Materiales dergestalt zur Vergleichmässigung über den Umfang der Austrittsöffnung (21), wobei wenigstens der Fluss A zwischen Einlass (10) und Ausgang (21) in eine Anzahl Teilflüsse (13) im wesentlichen spiraliger Form aufgeteilt wird und eine Raum (15) für einen Ueberlauf zwischen den Teilflüssen vorgesehen ist, so ausgebildet, dass die Teilflüsse mit Ueberlauf sich allmählich zu einem einzigen, kreisförmigen Fluss vereinen, **dadurch gekennzeichnet, dass** die Vereinigung von A und B an derselben Stelle wie ihre Vereinigung mit C oder in unmittelbarer Nähe dazu vorgenommen wird, und dass die Kanäle so ausgelegt sind, dass A veranlasst wird nach aussen in bezug auf die Achse des Werkzeuges wenigstens unmittelbar bevor A mit B und C zusammenfliesst und dass die Kanäle (19, 20) so gestaltet sind, dass B und C aufeinander zufliessen bevor sie sich mit A vereinigen.

21. Koextrusionswerkzeug nach Anspruch 20, **dadurch gekennzeichnet, dass** die Kanäle (11, 12) im wesentlichen spiraliger Form sich im wesentlichen in planarer Art erstrecken.

22. Koextrusionswerkzeug nach Anspruch 20, **dadurch gekennzeichnet, dass** die Kanäle (11, 12) im wesentlichen spiraliger Form in einer konischen Fläche gebildet sind, die Tangentialebenen der konischen Oberfläche einen Winkel von wenigstens 20 Grad zur Achse des Werkzeuges wenigstens über den überwiegenden abstromseitigen Teil der Oberfläche bildet.

23. Koextrusionswerkzeug nach Anspruch 22, **dadurch gekennzeichnet, dass** der Winkel wenigstens 45 Grad beträgt.

24. Koextrusionswerkzeug nach Anspruch 22, **dadurch gekennzeichnet, dass** die konische Oberfläche eine Rechtskonizität aufweist.

25. Koextrusionswerkzeug nach Anspruch 22, **dadurch gekennzeichnet, dass** jeder der Kanäle in spiralförmiger Form in Anschluss an ein Leitflächen-Teilsystem aus Kanälen gebildet ist.

26. Koextrusionswerkzeug gemäss Anspruch 25, **dadurch gekennzeichnet, dass** wenigstens ein Teil der Kanäle für die Leitflächen-Teilung integral mit den Kanälen im wesentlich spiraliger Form, die zwischen gegeneinander verspannter erster Werkzeugteile durch Rillungen in wenigstens einer Oberfläche eines Paares von Kontakflächen gebildet sind.

27. Koextrusionswerkzeug nach Anspruch 25, **dadurch gekennzeichnet, dass** wenigstens der erste Teil des Leitflächen-Teilsystems zweite Werkzeugteile (32, 33, 34) mit planaren oder konischen Oberflächen umfasst, die zweiten Werkzeugteile mit den ersten Werkzeugteilen zusammen verspannt sind, die Anordnung der Kanäle für den Teil der Leitflächen-Teilung durch Rillungen (35, 36) in Anlageflächen zwischen den zweiten Werkzeugteilen oder in Anlageflächen zwischen einem ersten und zweiten Werkzeugteil und teilweise durch Verbindungskanäle (37, 38, 39, 40) durch die zweiten und/oder ersten Werkzeugteile gebildet ist.

28. Koextrusionswerkzeug nach Anspruch 20, **dadurch gekennzeichnet, dass** der Ueberlauf der Teilflüsse durch austauschbare Einsätze (8a) im Werkzeug oder durch ein lagemässig einstellbares Vorrichtungsteil (8b) gegenüber den Rillungen einstellbar ist.

29. Koextrusionswerkzeug nach Anspruch 20, **dadurch gekennzeichnet, dass** abstromseitig des Ortes für die Zusammenführung der Flüsse aus verschiedenen polymeren Materialien, der Kanal für den gemeinsamen Fluss (18) auf die Achsrichtung hin gerichtet ist oder dass dieser Kanal von dem Ort über seine gesamte Weglänge axial verlaufend ist, um den Fluss im wesentlichen axial auszurichten wenn er die Austrittsöffnung (21) erreicht.

30. Koextrusionswerkzeug nach Anspruch 20, **dadurch gekennzeichnet, dass** abstromseitig des Ortes der Zusammenführung der Flüsse aus verschiedenen polymeren Materialien der Kanal für den gemeinsamen Fluss (18) sich in Richtung auf die Umfangsfläche des Werkzeuges ersteckt, dort wo die Austrittsöffnung (21) angeordnet ist, und dass an der Austrittsöffnung der Kanal für den gemeinsamen Fluss (18) mit der Achse des Werkzeuges einen Winkel von 20 Grad bildet und Einrichtungen zum Abzug des extrudierten Folienrohres bei Aufbringung eines eingestellten Ueberdrucks auf das Innere des Rohres zur Ausbildung eines gewünschten Durchmessers vorgesehen sind.

31. Koextrusionswerkzeug nach Anspruch 30, **dadurch gekennzeichnet, dass** ein Ring (22) konzentrisch zum Werkzeug und zu letzterem im fester Stellung auf einer Ebene vorgesehen ist, so dass die rohrförmige Folie über die Oberfläche des Ringes vermittels Einrichtungen gezogen werden kann, die die Folie in die axiale Richtung ziehen.

32. Koextrusionswerkzeug nach Anspruch 31, **dadurch gekennzeichnet, dass** der Querschnitt des Ringes wenigstens des Abschnittes, der mit der Folie in Berührung kommt, rund ist.

33. Koextrusionswerkzeug nach Anspruch 31, **dadurch gekennzeichnet, dass** Einrichtungen (24) zur Kühlung des Ringes durch inneren Umlauf eines Kühlmediums vorgesehen sind.

34. Koextrusionswerkzeug nach Anspruch 31, **dadurch gekennzeichnet, dass** der Ring in umittelbarer Nähe der Austrittsöffnung (21) angeordnet ist.

35. Koextrusionswerkzeug nach Anspruch 30, **dadurch gekennzeichnet, dass** wenigstens eine Seite der Austrittsöffnung durch eine Lippe (25) ausreichender Biegsamkeit gebildet ist, die eine Einstellung des Spaltes ermöglicht, und dass das Werkzeug Einrichtungen zur Einstellung umfasst.

36. Koextrusionswerkzeug nach Anspruch 20, **dadurch gekennzeichnet, dass** zusätzlich zum gesamten System der Kanäle für B und C ein System aus Kanälen (10, 11, 30) zur Koextrusion wenigstens eines weiteren polymerischen Materiales D vorgesehen ist, wobei diese Kanäle an einer inneren Ausflussöffnung (30) zur Vereinigung von D mit B oder C abstromseitig der Kanäle, die den Fluss von B oder C vergleichmässigen, ausmünden.

37. Koextrusionswerkzeug nach Anspruch 36, **dadurch gekennzeichnet, dass** die Stelle der Vereinigung von D und B oder C im wesentlichen die gleiche Stelle der Vereinigung von A mit B und C ist.

38. Extrusionswerkzeug kreisförmigen Querschnittes nach Anspruch 28, **dadurch gekennzeichnet, dass** der lagemässig einstellbare Vorrichtungsteil entweder umfasst ein biegsames, flaches, im wesentlichen kreisförmiges Blatt (8b), das an seinen einwärts (16a) und auswärts gerichteten Abgrenzungen an ein nicht flexibles Werkzeugteil, das Teil den Kanalsystems bildet, angelenkt ist, oder ein nicht biegsames, flaches, im wesentlichen kreisförmiges Blatt umfasst, das an seinen einwärts und auswärts gerichteten Abgrenzungen vermittels eines biegsamen, im wesentlichen kreisförmigen Blattes an ein nicht biegbares Werkzeugteil angelenkt ist und dass beide Ausführungsformen mit einer kreisförmigen Reihe von Einstelleinrichtungen (44, 45) auf der Seite der flachen kreisförmigen Folie oder Platte versehen sind, die entgegen dem Fluss stehend sind.

## Revendications

1. Un procédé de formation d'un film tubulaire par coextrusion d'au moins une matière polymère thermoplastique A avec au moins deux matières polymères thermoplastiques B et C d'un indice d'écoulement à l'état fondu qui est au moins le double de celui de A, B étant appliqué sur l'un et C sur l'autre côté de A, ladite extrusion étant mise en oeuvre au moyen d'une matrice d'extrusion circulaire présentant au moins une entrée (10) pour chaque composé et présentant un passage de sortie commun (18) se terminant en un orifice de sortie circulaire (21) de sorte que la ou chaque entrée est située plus près de l'axe (1) de la matrice circulaire que l'orifice de sortie et que les matières extrudables à l'état fondu s'écoulent vers l'extérieur en direction de l'orifice de sortie, et procédé dans lequel la conformation de chaque écoulement de chaque composé est établie par une disposition de premières parties de matrice (5, 6, 7a, 7b) présentant des surfaces planes ou coniques, parties de matrice qui sont serrées ensemble avec lesdites surfaces présentant des rainures (14) conformées pour constituer des conduits (11, 12, 13, 14) pour l'écoulement de chaque matière polymère de manière à égaliser l'écoulement sur la circonférence de l'orifice de sortie, de sorte qu'au moins l'écoulement de A entre l'entrée ou chaque entrée et la sortie est divisé un certain nombre d'écoulements partiels (14) de forme généralement hélicoïdale au moins à travers une partie de chaque conduit avec un espace (15) prévu pour débordement entre lesdites parties hélicoïdales et lesdits écoulements partiels avec débordements se joignent de manière graduelle en un écoulement circulaire commun **caractérisé en ce que** la jonction de A avec B (19) est établie au niveau du même emplacement que sa jonction avec C (20) ou à son voisinage immédiat, et **en ce que** A s'écoule vers l'extérieur par rapport à l'axe de la matrice immédiatement avant qu'il se joigne avec B et C, alors que B et C s'écoulent l'un vers l'autre immédiatement avant la jonction.

2. Un procédé selon la revendication 1, **caractérisé en ce que** lesdits écoulements partiels d'une forme généralement hélicoïdale s'étendent d'une manière généralement plane.

3. Un procédé selon la revendication 1, **caractérisé en ce que** lesdits écoulements partiels d'une forme généralement hélicoïdale s'étendent dans une disposition géométrique comme le long d'une surface conique circulaire, les plans tangents de ladite surface conique délimitant un angle d'au moins 20° par rapport à l'axe de la matrice au moins sur la partie la plus aval de ladite surface.

4. Un procédé selon la revendication 3, **caractérisé en ce que** le dit angle est d'au moins 45°.

5. Un procédé selon la revendication 3, **caractérisé en ce que** ladite surface décrivant l'extension de la forme hélicoïdale est une surface conique droite.

6. Un procédé selon la revendication 1, **caractérisé en ce que** chaque écoulement partiel est formé par une division labyrinthine dans la matrice d'un ou de plusieurs écoulements.

7. Un procédé selon la revendication 6, **caractérisé en ce que** les conduits d'au moins une partie des conduits (11, 12, 13) pour la division labyrinthine sont formés de manière solidaire avec les conduits (14) pour l'écoulement généralement hélicoïdal entre les surfaces planes ou coniques desdites premières parties de matrice par des rainures dans au moins une surface d'une paire de surfaces en contact.

8. Un procédé selon la revendication 6, **caractérisé en ce que** au moins le début de ladite division labyrinthine est établi par l'utilisation de secondes parties de matrice (32, 33, 34)) présentant des surfaces planes ou coniques, les secondes parties de matrice étant serrées ensemble avec les premières parties de matrice, la disposition des conduits pour ledit début de la division labyrinthine étant établie en partie par des rainures (35a, 35b, 36a, 36b) dans des surfaces en contact entre lesdites secondes parties ou entre une seconde partie et une première partie et en partie par des conduits d'interconnexion (37, 38, 39) à travers lesdites secondes et/ou premières parties.

9. Un procédé selon la revendication 1, **caractérisé en ce que** ledit débordement entre les écoulements partiels est réglable par des inserts échangeables (8a) entre de premières parties de matrice ou par une partie d'appareil réglable en position (8b) à l'opposé des rainures.

10. Un procédé selon la revendication 1, **caractérisé en ce que** après jonction des écoulements de différentes matières polymères, l'écoulement commun dans le passage de sortie commun est tourné vers la direction axiale ou se poursuit immédiatement dans cette direction pour s'écouler de manière généralement axiale lorsqu'il atteint l'orifice de sortie.

11. Un procédé selon la revendication 1, **caractérisé en ce que** après jonction de l'écoulement de différentes matières polymères, l'écoulement commun se poursuit droit vers la surface périphérique de la matrice, où est situé l'orifice de sortie, et quitte la sortie sous un angle d'au moins 20 degrés par rapport à l'axe de la matrice, et **en ce qu'**une surpression réglée est appliquée à l'intérieur du film tubulaire pour établir le diamètre désiré du tube lorsqu'il est tiré vers le bas et solidifié.

12. Un procédé selon la revendication 11, **caractérisé en ce que** ayant quitté l'orifice de sortie, le film tubulaire à l'état fondu rencontre un anneau (22) qui est concentrique à la matrice et dans une relation fixe par rapport à cette dernière, et **en ce que** le film est tourné sur l'extérieur de l'anneau de sorte que l'angle entre l'axe de la matrice et la direction de déplacement du film est réduit et qu'une force de friction est établie entre l'anneau et le film pour aider à une orientation moléculaire du film, alors que ce dernier est tiré sur l'anneau.

13. Un procédé selon la revendication 12, **caractérisé en ce que** la section transversale de l'anneau est ronde au moins sur la partie de la surface qui vient en contact avec le film.

14. Un procédé selon la revendication 12, **caractérisé en ce que** ledit anneau est refroidi par circulation interne d'un système de refroidissement.

15. Un procédé selon la revendication 12, **caractérisé en ce que** ledit anneau est monté (23) dans le voisinage immédiat de l'orifice de sortie.

16. Un procédé selon la revendication 11, **caractérisé en ce que** au moins un côté de l'orifice de sortie est défini par une lèvre (25) qui est suffisamment souple pour permettre un réglage du trou de l'orifice et **en ce que** des dispositifs (26) sont prévus pour ce réglage.

17. Un procédé selon la revendication 1, **caractérisé en ce que**, en plus de B et C, au moins une autre matière polymère thermoplastique D présentant un indice d'écoulement à l'état fondu au moins double de celui de A est joint à B ou C à un étage quelconque (30) après l'égalisation de l'écoulement dudit B ou C.

18. Un procédé selon la revendication 1, **caractérisé en ce que** prend place une co-extrusion d'un autre composé E, ayant un indice d'écoulement à l'état fondu égal ou supérieur à celui de A, et **en ce que** A et E sont soit directement joints l'un avec l'autre avant leur jonction avec les écoulements de B et C, soit sont directement joints l'un avec l'autre au niveau essentiellement du même emplacement (31) que leur jonction avec B et C.

19. Un procédé selon la revendication 9, **caractérisé en ce que** une telle partie d'appareil réglable en position , soit comprend une feuille annulaire souple généralement plate (8b) qui, à ses limites vers l'intérieur (16a) et vers l'extérieur (16c), est fixée à une partie de matrice rigide (7c) faisant partie du système de conduit, soit comprend une plaque annulaire rigide généralement plate qui, à ses limites vers l'intérieur et vers l'extérieur, est articulée par l'intermédiaire d'une feuille souple généralement annulaire à une telle partie de matrice rigide, dans chaque cas avec une rangée circulaire de dispositifs de réglage (44, 45) sur le côté de la feuille ou plaque plate généralement annulaire qui est opposée à l'écoulement.

20. Une matrice de co-extrusion circulaire pour co-extruder au moins une matière polymère thermoplastique A avec au moins deux matières polymères thermoplastiques B et C, B étant appliqué sur l'un et C sur l'autre côté de A pour former un film tubulaire, ladite matrice d'extrusion circulaire ayant au moins une entrée (10) pour chaque composé et ayant un conduit de sortie commun (18) se terminant en un orifice de sortie circulaire (21), de sorte que l'entrée ou chaque entrée (10) est située plus près de l'axe (1) de la matrice circulaire que l'orifice de sortie (21) et que les matières extrudables sont dirigées pour s'écouler vers l'extérieur en direction de l'orifice de sortie (21), et dans lequel la conformation de chaque écoulement de chaque composé est établie par une disposition de premières parties de matrice (5, 6, 7, 28, 29) présentant des surfaces planes ou coniques, lesquelles sont serrées ensemble avec les surfaces desdites parties présentant des rainures (14) conformées pour constituer des conduits (11, 12, 13) pour l'écoulement de chaque matière polymère de manière à égaliser l'écoulement sur la circonférence de l'orifice de sortie (21), de sorte qu'au moins l'écoulement de A (12) entre chaque entrée (10) et la sortie (21) est divisé en un certain nombre d'écoulements partiels (13) de forme généralement hélicoïdale avec un espace (15) prévu pour débordement entre lesdits écoulements partiels et adapté pour que lesdits écoulements partiels avec débordements se joignent graduellement en un écoulement circulaire commun, **caractérisée en ce que** la jonction de A avec B s'établit au niveau du même emplacement que sa jonction avec C ou à son voisinage immédiat, et **en ce que** les conduits sont adaptés pour faire que A s'écoule vers l'extérieur par rapport à l'axe de la matrice au moins immédiatement avant qu'il se joigne avec B et C, et **en ce que** les conduits (19, 20) sont adaptés pour faire que B et C s'écoulent l'un vers l'autre immédiatement avant leur jonction avec A.

21. Une matrice de co-extrusion selon la revendication 20, **caractérisée en ce que** lesdits conduits (11, 12) de forme généralement hélicoïdale s'étendent d'une manière généralement plane.

22. Une matrice de co-extrusion selon la revendication 20, **caractérisée en ce que** lesdits conduits (11, 12) de forme généralement hélicoïdale sont formés en une surface conique, les plans tangents desdites surfaces coniques délimitant un angle d'au moins 20° par rapport à l'axe de la matrice au moins sur la partie la plus aval de ladite surface.

23. Une matrice de co-extrusion selon la revendication 22, **caractérisée en ce que** ledit angle est d'au moins 45°.

24. Une matrice de co-extrusion selon la revendication 22, **caractérisée en ce que** la surface conique a une conicité droite.

25. Une matrice de co-extrusion selon la revendication 20, **caractérisée en ce que** chacun des conduits de forme généralement hélicoïdale est conformé en continuation d'un système de division labyrinthine de conduits.

26. Une matrice de co-extrusion selon la revendication 25, **caractérisée en ce que** les conduits d'au moins une partie des conduits pour la division labyrinthine sont formés de manière solidaire avec les conduits de forme généralement hélicoïdale entre les premières parties de matrice serrées ensemble par des rainures dans au moins une surface d'une paire de surfaces en contact.

27. Une matrice de co-extrusion selon la revendication 25, **caractérisée en ce que** au moins la première partie dudit système de division labyrinthine comprend de secondes parties de matrice (32, 33, 34) présentant des surfaces planes ou coniques, les secondes parties de matrice étant serrées ensemble avec lesdites premières parties de matrice, la disposition de conduits pour ladite partie de la division labyrinthine étant établie en partie par des rainures (35, 36) dans des surfaces de contact entre lesdites secondes parties ou entre une seconde partie (34) et une première partie (5) et en partie par des conduits d'interconnexion (37, 38, 39) à travers lesdites secondes et/ou premières parties.

28. Une matrice de co-extrusion selon la revendication 20, **caractérisée en ce que** le débordement entre les écoulements partiels est rendu réglable par des inserts échangeables (8a) dans la matrice ou par une partie d'appareil réglable en position (8b) à l'opposé des rainures.

29. Une matrice de co-extrusion selon la revendication 20, **caractérisée en ce que**, à l'aval de l'emplacement pour jonction des écoulements de différentes matières polymères, le conduit pour l'écoulement commun (18) est tourné vers la direction axiale, ou **en ce que** ce conduit est généralement axial sur tout le trajet depuis ledit emplacement, pour diriger l'écoulement de manière généralement axiale lorsqu'il atteint l'orifice de sortie (21).

30. Une matrice de co-extrusion selon la revendication 20, **caractérisée en ce que**, à l'aval de l'emplacement pour jonction des écoulements de différentes matières polymères, le conduit pour l'écoulement commun (18) se poursuit vers la surface périphérique de la matrice, où est situé l'orifice de sortie (21) et, au niveau de l'orifice de sortie, ledit conduit pour l'écoulement commun (18) délimite un angle d'au moins 20° par rapport à l'axe de la matrice, et **en ce que** des moyens sont prévus pour tirer vers le bas le film tubulaire extrudé tout en appliquant une surpression intérieure régulée pour établir le diamètre désiré.

31. Une matrice de co-extrusion selon la revendication 30, **caractérisée par** le fait de comprendre un anneau (22) qui est concentrique avec la matrice et en relation fixe par rapport à cette dernière à un niveau tel que le film tubulaire puisse être tourné sur la surface de cet anneau par des dispositifs tirant le film généralement dans la direction axiale.

32. Une matrice de co-extrusion selon la revendication 31, **caractérisée en ce que** la section transversale de l'anneau (22) est ronde au moins sur la partie de la surface qui est adaptée pour venir en contact avec le film.

33. Une matrice de co-extrusion selon la revendication 31, **caractérisée par** des moyens (24) pour refroidir ledit anneau par circulation interne d'un milieu de refroidissement.

34. Une matrice de co-extrusion selon la revendication 31, **caractérisée en ce que** ledit anneau est monté au voisinage immédiat de l'orifice de sortie (21).

35. Une matrice de co-extrusion selon la revendication 30, **caractérisée en ce que** au moins un côté de l'orifice de sortie est constitué par une lèvre (25) qui est suffisamment souple pour permettre le réglage du trou et **en ce que** la matrice comprend des dispositifs pour ce réglage.

36. Une matrice de co-extrusion selon la revendication 20, **caractérisée en ce que** en plus du système total de conduits pour B et C, on prévoit un système de conduits (10, 11, 30) pour co-extruder au moins une autre matière polymère thermoplastique D, lesdits conduits se terminant en un orifice interne (30) pour jonction de D avec B ou C à l'aval des conduits qui égalisent l'écoulement dudit B ou C.

37. Une matrice de co-extrusion selon la revendication 36, **caractérisée en ce que** l'emplacement pour jonction de D avec B ou C est essentiellement le même que l'emplacement de la jonction de A avec B et C.

38. Une matrice d'extrusion circulaire selon la revendication 28, **caractérisée en ce que** une telle partie d'appareil réglable en position, soit comprend une feuille annulaire souple généralement plate (8b) qui, à ses limites vers l'intérieur (16a) et vers l'extérieur (16c), est fixée à une partie de matrice rigide faisant partie du système de conduits, soit comprend une plaque annulaire rigide généralement plate qui, à ses limites vers l'intérieur et vers l'extérieur, est articulée par l'intermédiaire d'une feuille souple généralement annulaire à une telle partie de matrice rigide, dans chaque cas avec une rangée circulaire de dispositifs de réglage (45, 46) sur le côté de la feuille ou plaque plate généralement annulaire qui est opposée à l'écoulement.
